# EUROPÄISCHE PATENTSCHRIFT

(11) **EP 4 236 675 B1**
(45) Veröffentlichungstag und Bekanntmachung des Hinweises auf die Patenterteilung: **22.04.2026**
(21) Anmeldenummer: 21743447.1
(22) Anmeldetag: 12.07.2021
(51) Int. Cl.: A01G 9/04, A01G 31/02, A01G 25/16

(54) **MODULARES KULTIVIERUNGSSYSTEM UND VERFAHREN ZUR KULTIVIERUNG VON PROKARYOTISCHEN UND/ODER EUKARYOTISCHEN ORGANISMEN**
MODULAR CULTURE SYSTEM AND METHOD FOR CULTURING PROKARYOTIC AND/OR EUKARYOTIC ORGANISMS
SYSTÈME DE CULTURE MODULAIRE ET PROCÉDÉ DE CULTURE D'ORGANISMES PROCARYOTES ET/OU EUCARYOTES

(30) Priorität: 27.10.2020 DE 102020128230
(43) Veröffentlichungstag der Anmeldung: 06.09.2023
(73) Patentinhaber: Stadtgemüse UG (Haftungsbeschränkt), 65185 Wiesbaden (DE)
(72) Erfinder: SCHMIDT, Thorsten, 55131 Mainz (DE)
(74) Vertreter: Bernsmann, Falk
(86) Internationale Anmeldenummer: PCT/EP2021/069279
(87) Internationale Veröffentlichungsnummer: WO 2022/089795

(56) Entgegenhaltungen:
- US-A1- 2016 135 395
- US-A1- 2020 000 051
- US-B1- 6 247 268

## Beschreibung

### Technisches Gebiet

Die Erfindung betrifft ein modulares Kultivierungssystem zur Kultivierung von prokaryotischen und/oder eukaryotischen Organismen mit einer Nährstofflösung für die Organismen. Das Kultivierungssystem umfasst eine Anzahl von für die Nährstofflösung leitend miteinander verbundenen Kultivierungsmodulen zur Aufnahme der Organismen und ein mit einem der Kultivierungsmodule für die Nährstofflösung leitend verbundenes Entnahmemodul zur kontrollierten Entnahme der Nährstofflösung aus dem Kultivierungsmodul.

Die Erfindung betrifft außerdem ein Verfahren zur Kultivierung von prokaryotischen und/oder eukaryotischen Organismen in einem erfindungsgemäßen Kultivierungssystem.

### Stand der Technik

Hydroponik ist eine Form der Pflanzenkultur, die mit oder ohne ein Substrat erfolgen kann. Den Pflanzen wird dabei eine Nährstofflösung zugeführt. Die Nährstofflösung kann dabei mineralischen und/oder natürlichen Ursprungs sein und beispielsweise aus der Ko-Kultur mit Fischen (Aquaponik) oder anderen Quellen (z.B. bei gebäudeintegriertem Pflanzenbau wie dem inFARMING^{®}-Konzept des Fraunhofer-Instituts für Umwelt-, Sicherheits- und Energietechnik) stammen.

Aquaponik ist die Kombination einer Aquakultur und einer Hydroponik-Anlage, die ein geschlossenes Kreislaufsystem bilden. Das System funktioniert, indem aufbereitetes Abwasser der Fischzucht, den Pflanzen als Nährlösung angeboten wird. Eine einfache Anlage wurde bereits 1985 zum Patent angemeldet (DD 240 327 A1).

In einem aquaponischen System wie bspw. in EP 2 158 808 B1 beschrieben, kann in der Praxis unter wirtschaftlichen Gesichtspunkten nur einen Teil des Abwassers aus der Aquakultur in aufbereiteter Form in der Pflanzenproduktion verwertet werden. Das bedeutet, dass ein großer Teil des Abwassers der Aquakultur trotzdem entsorgt und gleichzeitig ausreichend Frischwasser aus externen Quellen wieder hinzugefügt werden muss.

Statt Abwasser aus einer Fischkultur zu verwenden, wird beim inFARMING^{®}-Prinzip aus Gebäuden gewonnenes Grau- und Schwarzwasser gebäudeintern aufbereitet, und die daraus gewonnene Nährlösung zur Versorgung von Pflanzen verwendet (EP 732 457 B1).

Auch wenn die oben benannten Kulturtechniken in vielerlei Hinsicht bereits optimiert sind, weisen sie Nachteile auf, die besonders im Zusammenhang mit der maschinellen Bearbeitbarkeit, der Flexibilität der Kulturführung, dem nötigen Wasserdurchsatz, der Hygiene und der Nachhaltigkeit in der Produktion stehen.

Auf dem Markt haben sich eine Vielzahl von Kulturgeräten und -verfahren für die Hydrokultur etabliert. Inzwischen wird für fast jede Kultur ein eigenes System bereitgestellt. Dies hat Nachteile, beispielsweise wenn der Produzent Produktabsatzschwierigkeiten hat und eine andere Kultur anbauen möchte. Ein Kulturwechsel kann eine vollständige Umstellung des Anbausystems mit hohen Investitionskosten nach sich ziehen.

Allgemein kann man sagen, dass Hydrokulturgeräte auf einer U-, V, oder O-förmigen Rinne basieren. In oder auf die Rinne wird ein Substratsack oder Substratschlauch aufgelegt, bzw. ein Substratwürfel eingelegt, in dem die Pflanzen wachsen können. Meist ist für überschüssige Nährlösung eine Auffangmöglichkeit mit Rückführung zu einer Wiederaufbereitung vorgesehen Je nach Ausgestaltung müssen Teile, oder alle Kunststoffelemente nach jedem Anbauzyklus erneuert werden.

Ein häufig verwendetes Substrat mit besten technischen Eigenschaften besteht aus folienumhüllter, mineralischer Steinwolle. Es muss nach meist einmaliger Verwendung kostenintensiv als Sondermüll entsorgt werden. Andere anorganische oder organische Substrate bieten nicht das gleiche Leistungsspektrum, verrotten schlecht oder können nur teilweise oder gar nicht recycelt werden, und sie kommen oft ebenfalls nicht ohne Folie aus.

Trotz aller Innovationen in diesem Bereich werden viele Bearbeitungsprozesse händisch ausgeführt. Die kostenintensive Handarbeit kann nur durch noch kostenintensivere Robotik ersetzt werden.

Der Nachfrage einer nachhaltigen Lebens- und Wirtschaftsweise kommen die vorgenannten Techniken insofern näher, als dass sie nahezu an jedem Ort, beispielsweise auf großen innerstädtischen Dachflächen oder an Industriestandorten errichtet werden können. Durch wegfallende Transportwege entstehen weniger CO₂-Emissionen, wenn im innerstädtischen Bereich die Lebensmittel dort produziert werden, wo sie verbraucht werden. An Industriestandorten ergeben sich klima- und geldwerte Effekte, indem beispielsweise Abwärme zum Heizen von Gewächshäusern genutzt wird.

Die vergleichbaren Hydrokulturanbausysteme sind Nutrient Film Technique (NFT), Deep Flow Technique (DFT), Deep Water Culture (DWC) und die Ebbe und Flut Methode.

NFT ist ein geschlossenes Rinnensystem, das von einem konstanten, meist wenige Millimeter starken Nährlösungsfilm permanent durchflossen wird. An der Oberseite der Rinnen sind Ausschnitte für Pflanztöpfe. Die Wurzeln der Pflanzen ragen in den Nährlösungsstrom hinein. Diese Methode eignet sich nur für kleinere Pflanzen wie beispielsweise Kräuter, Salate und Erdbeeren. Nachteilig ist auch, dass die Rinnen durch das Wurzelwachstum schnell verstopfen können und der Nährstofffilm abreißt. Zudem heizt sich bei starker Sonneneinstrahlung der Nährstofffilm schnell auf. Beides führt häufig zu irreparablen Trockenschäden oder Totalausfällen. Darüber hinaus werden häufig die Wurzeln nicht ausreichend mit Sauerstoff versorgt und aufgrund des geringen Gesamtwasserdurchsatzes ist das System nicht für aquaponische oder Brauchwasseranwendungen geeignet.

DFT und DWC-Systeme bestehen in der Regel aus einer Wanne, die von Nährlösung durchströmt wird. Entweder sind Tragkörper für die Pflanzenaufnahme in einem definierten Abstand zur Wasseroberfläche fixiert (DFT), oder die Tragkörper schwimmen wie Flöße auf der Wasseroberfläche (DWC). Die Tragkörper verfügen wie beim NFT über Ausschnitte für Töpfe. Hier jedoch flottieren die Wurzeln der Pflanzen frei im Wasser. Um Fäulnis zu verhindern und um die Wurzeln mit Sauerstoff zu versorgen, ist ein zusätzlicher energetischer Aufwand zur Belüftung der Wurzeln notwendig. Darüber hinaus können Pflanzenteile und Früchte leicht mit der Nährlösung in Kontakt kommen. Dies kann gesundheitsschädlich sein, wenn die Nährlösung oder das aufbereitete Abwasser mikrobiell nicht einwandfrei ist. Großpflanzen wie Paprika, Tomaten oder Gurken sind mit der Floßtechnik aus statischen Gründen nicht möglich. Aufgrund des hohen Flächengewichts der Systeme eignen sich diese Techniken nicht für die Dachkultur, da meist kostenintensive Maßnahmen zur Ertüchtigung der Bausubstanz notwendig werden.

Allen Methoden ist gemein, dass permanent problematische Abfälle aus Kunststoffen entstehen. In den meisten Fällen ist eine aufwändige Sonderbehandlung der Abfälle notwendig, oder eine Trennung der Biomasse von den Substraten ist erst gar nicht möglich. Darüber hinaus ist der Umgang mit einzelnen Pflanztöpfen und Substratblöcken aufwändig und arbeitszeitintensiv, da die Bepflanzung meist manuell ausgeführt wird. Auch die getrennte Entsorgung von Bio- und Sondermüll ist nicht nur beim Urban Farming mit höherem Aufwand und Kosten verbunden.

Im bekannten hydroponischen Ebbe- und Flut-System wurzeln Pflanzen meist in einer mit Ton- oder Lavagranulaten befüllten Wanne. Diese Wanne wird in Intervallen bis zu einer feststehenden Höhe geflutet, und mittels eines Siphons oder Ventils beim Erreichen der Höchstmarke, schlagartig entleert.

Unter Kulturbedingungen sammeln sich abgestorbene Wurzel- oder Pflanzenreste in den Poren oder in den Zwischenräumen des Substrats an, da sie nicht abtransportiert werden können. In einem Erdsubstrat würden Kleinst- und Kleinlebewesen wie positiv wirkende Mikroorganismen, Springschwänze oder Regenwürmer die Reste zersetzen. Jedoch können sie unter diesen Bedingungen nicht existieren. Es kommt zu Faulprozessen und anderen unkontrollierbaren mikrobiologischen Vorgängen. Dies beeinträchtigt nicht nur die Nährstoffaufnahme und das Wachstum, sondern betrifft auch die Standfestigkeit der Pflanzen.

Ein weiteres Problem ist, dass die Becken hinsichtlich Größe und Wasserdurchsatzmenge dimensionsbegrenzt sind. Das Substrat bremst den Wasserfluss erheblich ab, was den Wasserdurchsatz einschränkt. Gleichzeitig wird die gleichmäßige Nährstoffverteilung verhindert, weshalb die Nährstoffversorgung der Pflanzen innerhalb der Wanne ungleichmäßig ist.

Die Druckschrift WO 2001/083690 A2 beschreibt ein Container-Gartensystem mit elastischen geschäumten Polymerelementen zum Einsetzen von Pflanzen und hohlen Wurzelwachstumskammern. Die Container sind so aufgebaut, dass an einer Oberseite eine Kammer zur Stützung der Polymerelemente vorgesehen ist, und im Unterteil eine Kammer mit Nährlösung und einem darüber angeordneten Luftspalt vorgesehen ist.

Die Druckschrift WO 2008/084323 A2 offenbart eine Vorrichtung für aeroponische und hydroponische Kulturen. Sie umfasst einen nach oben offenen, kastenförmigen Körper. Die Nährlösung wird zu den Wurzeln durch Zuführungsmittel befördert, die an mindestens einer der Seitenwände vorgesehen sind.

Die Druckschrift EP 2 441 325 B1 offenbart eine Pflanzenzuchtvorrichtung mit mehreren Pflanzbehältern, die Abfluss- und Berieselungsleitungen für Wasser an gegenüberliegenden Seiten der Behälter umfassen.

Die Druckschrift WO 2016/147128 A1 offenbart einen schwimmenden Pflanzenvermehrungsbehälter, der in einem landwirtschaftlichen Wassertank angeordnet werden kann. Es sind untere Erdzellen-Öffnungen vorgesehen, durch die Wasser in die einzelnen Erdzellen des Pflanzenvermehrungsbehälters eindringen kann.

Die Druckschrift US 2020/000051 A1 beschreibt ein modulares Tanksystem für Aquaponik. Die Druckschrift US 2016/135395 A1 beschreibt ein modulares, hydroponisches Kultivierungssystem. Die Druckschrift US 6 247 268 B1 offenbart eine modular erweiterbare hydroponische Vorrichtung. Die Druckschrift US 2015/237807 A1 beschreibt ein Pflanzenwachstumssystem, umfassend einen Behälter und einen Einsatz dafür. Die Druckschrift US 2008/302010 A1 offenbart eine verbesserte Kanalisierung für hydroponische oder ähnliche Anbauten. Die Druckschrift ES 2 284 378 A1 beschreibt eine Installation für eine hydroponische Kultur. Die Druckschrift US 9 149 006 B1 offenbart eine modulare Pflanzanordnung aus mehreren U-förmigen Pflanzcontainern. Die Druckschrift EP 3 369 310 A1 beschreibt ein hydroponisches Nährstoff-Kultivierungssystem.

### Technische Aufgabe

Die Aufgabe der Erfindung ist es, ein kostengünstiges, nachhaltiges, robustes und effizientes Kultivierungssystem und Kultivierungsverfahren für Organismen zu schaffen, das an unterschiedliche Kulturen anpassbar ist und eine geringe Flächenbelastung bewirkt.

### Technische Lösung

Der Gegenstand der vorliegenden Erfindung stellt ein Kultivierungssystem gemäß Anspruch 1 bereit, das die technische Aufgabe löst. Ebenso wird die Aufgabe durch ein Verfahren gemäß Anspruch 14 gelöst. Vorteilhafte Ausgestaltungen ergeben sich aus den abhängigen Ansprüchen.

### Beschreibung der Ausführungsarten

Die Erfindung betrifft ein modulares Kultivierungssystem zur Kultivierung, insbesondere Hydroponik, von prokaryotischen und/oder eukaryotischen Organismen, insbesondere Pflanzen, mit einer Nährstofflösung für die Organismen. Die Organismen können insbesondere terrestrische und/oder aquatische Pflanzen zur Nahrungsmittelgewinnung, beispielsweise Gemüsepflanzen, bevorzugt Gurken und/oder Tomaten, umfassen. Durch die Kultivierung von Pflanzen zur Nahrungsmittelgewinnung kann das Kultivierungssystem vorteilhafterweise zur wohnortnahen Nahrungsmittelproduktion verwendet werden.

Im Folgenden wird Nährstofflösung synonym für jegliches fließfähiges, insbesondere flüssiges, Medium verwendet, welches geeignet ist, vorgenannte Organismen zu kultivieren, beispielsweise durch Zuführung von Nährstoffen und Flüssigkeit.

Die Nährstofflösung kann insbesondere auf Quellwasser, Regenwasser, Grundwasser, Oberflächenwasser und/oder Salzwasser basieren, oder dazu zugesetzt werden.

Die Nährstofflösung stammt vorzugsweise aus natürlichen Quellen, und kann insbesondere auf vorbehandeltem Abwasser aus Aquakulturen, Kläranlagen, Tierhaltung, Gebäudeabwasser, Biogasanlagen oder Kompostierungsanlagen basieren oder dazu zugesetzt werden. Die Verwendung von Abwasser reduziert den Frischwasserverbrauch des Kultivierungssystems. Außerdem wird die Nährstofffracht des Abwassers ganz oder teilweise durch die Abgabe von Nährstoffen an die Organismen verringert. Eine Aufbereitung des Abwassers vor und/oder nach der Verwendung in dem Kultivierungssystem kann damit vereinfacht sein. Ein Einsatz des Kultivierungssystems in einem Kreislaufsystem ist hierbei besonders vorteilhaft.

Das Kultivierungssystem umfasst eine Anzahl, insbesondere eine Mehrzahl, von, beispielsweise ein, zwei, drei oder mehr, für die Nährstofflösung leitend miteinander verbundenen Kultivierungsmodulen zur Aufnahme der Organismen. Wenn das Kultivierungssystem mehrere Kultivierungsmodule umfasst, ergibt sich aus der für die Nährstofflösung leitenden Verbindung der Vorteil, dass nicht jedes Kultivierungsmodul einzeln mit Nährstofflösung versorgt werden muss.

Durch einen Aufbau des Kultivierungssystems aus mehreren, insbesondere gleichartigen, Kultivierungsmodulen, kann die Größe des Kultivierungssystems leicht durch Entfernung oder Hinzufügung von Kultivierungsmodulen an einen aktuellen Bedarf angepasst werden. Weiterhin ist es möglich, in den einzelnen Kultivierungsmodulen voneinander unterschiedliche Kultivierungsbedingungen für unterschiedliche Organismen und/oder gleichartige Organismen in unterschiedlichen Entwicklungsstadien einzustellen. Beispielsweise kann eine Füllhöhe der Nährstofflösung in den Kultivierungsmodulen eingestellt werden, und/oder für die jeweiligen Organismen ein optimales Substrat ausgewählt werden.

Insbesondere kann auch ein einzelnes Kultivierungsmodul mit einem mit dem Kultivierungsmodul für die Nährstofflösung leitend verbundenen, insbesondere in das Kultivierungsmodul integrierten, Entnahmemodul und vorzugsweise einem Einspeisemodul ein Kultivierungssystem bilden, beispielsweise als alleinstehendes System für den Hausgebrauch. Dabei umfasst das, insbesondere in das Kultivierungsmodul integrierte, Einspeisemodul vorzugsweise eine Einspeise-Steuervorrichtung (z.B. eine Pumpe) zur Steuerung der Einspeisung der Nährstofflösung und/oder einen Vorratstank für die Nährstofflösung.

Das Kultivierungssystem kann beispielsweise auf einem Untergrund aufgelegt oder aufgestellt sein und/oder, beispielsweise über ein geeignetes Trage- und/oder Haltesystem, hängend angeordnet sein. Insbesondere kann das Kultivierungssystem in mehreren übereinander angeordneten Etagen angeordnet sein.

Das Kultivierungssystem umfasst zumindest ein mit zumindest einem der Kultivierungsmodule für die Nährstofflösung leitend verbundenes Entnahmemodul zur kontrollierten Entnahme der Nährstofflösung aus dem Kultivierungsmodul. Mit Hilfe des Entnahmemoduls können beispielsweise eine Strömungsgeschwindigkeit, eine Verweildauer und/oder eine Füllhöhe der Nährstofflösung in den Kultivierungsmodulen an Art und/oder Entwicklungsstadium der in den Kultivierungsmodulen kultivierten Organismen angepasst werden.

Die Kultivierungsmodule umfassen jeweils zumindest einen Außenbehälter zur Durchströmung mit der Nährstofflösung in einer Strömungsrichtung und zumindest einen zumindest teilweise in dem Außenbehälter angeordneten Innenbehälter zur Aufnahme der Organismen. Der Innenbehälter ist vorzugsweise für die Organismen und/oder für ein Substrat zur Kultivierung der Organismen undurchlässig. Die Kultivierungsmodule können jeweils zwei, drei oder mehr ineinander und/oder in Strömungsrichtung hintereinander angeordnete Innenbehälter umfassen. Beispielsweise kann bei zwei ineinander angeordneten Innenbehältern der innere Innenbehälter zur Aufnahme der Organismen und bevorzugt eines Substrats für die Organismen dienen. Der äußere Innenbehälter kann die Nährstofflösung zu den Organismen zuführen, beispielsweise in Form einer sequentiellen Flutung. Der Außenbehälter kann die Nährstofflösung nach dem Kontakt mit den Organismen abführen.

Der Klarheit halber wird die Erfindung im Folgenden am Beispiel von Kultivierungsmodulen mit einem Innenbehälter beschrieben. Die beschriebenen Ausgestaltungen sind erfindungsgemäß auf Kultivierungsmodule mit mehreren Innenbehältern übertragbar.

Durch den Aufbau des Kultivierungssystems mit Außenbehälter und Innenbehälter wird verhindert, dass die Organismen und/oder ein Substrat zur Kultivierung der Organismen durch eine Durchströmung des Außenbehälters mit der Nährstofflösung unerwünscht in Bewegung geraten, aufschwimmen und/oder fortgespült werden.

Die Kultivierungsmodule umfassen jeweils eine Anzahl von, insbesondere ein, zwei, drei oder mehr Verbindungsvorrichtungen, zur für die Nährstofflösung leitenden Verbindung des Außenbehälters mit dem Außenbehälter eines weiteren Kultivierungsmoduls und/oder mit dem Entnahmemodul und/oder mit einem Einspeisemodul. Mit Hilfe der Verbindungsvorrichtungen kann eine Mehrzahl von Kultivierungsmodulen miteinander verbunden werden, sodass die Organismen in den Kultivierungsmodulen besonders einfach mit der Nährstofflösung versorgt werden können.

Wenn das Kultivierungsmodul zwei Verbindungsvorrichtungen umfasst, sind die beiden Verbindungsvorrichtungen vorzugsweise komplementär zueinander geformt.

Die Verbindungsvorrichtungen können beispielsweise Steckelemente, insbesondere Steckmuffen, zum Zusammenstecken der Außenbehälter zweier Kultivierungsmodule umfassen oder sein. Die Steckmuffen können insbesondere wie die Steckmuffen bekannter Hochtemperaturrohre (HT-Rohre), ausgestaltet sein. In einer besonders einfachen Ausgestaltung kann der Außenbehälter ein entlang seiner Längsachse halbiertes Abwasserrohr umfassen oder sein.

Der Innenbehälter ist zumindest abschnittsweise für die Nährstofflösung durchlässig, sodass die Nährstofflösung aus dem Außenbehälter an die Organismen in dem Innenbehälter gelangen kann, um die Organismen mit Nährstoffen und/oder Wasser zu versorgen.

Zwischen dem Außenbehälter und dem Innenbehälter ist zumindest quer zur Strömungsrichtung horizontal neben dem Innenbehälter, insbesondere beidseitig horizontal neben dem Innenbehälter, vorzugsweise auch unter dem Innenbehälter, ein Nährstoffraum zur Durchströmung mit der Nährstofflösung angeordnet.

Dadurch dass der Nährstoffraum neben dem Innenbehälter angeordnet ist, kann die Nährstofflösung nicht nur wie bei bekannten Fluttischen von unten in den Innenbehälter eindringen, sondern auch von der Seite, wodurch auch in einem großen Innenbehälter kultivierte Organismen schnell und vollständig mit der Nährstofflösung versorgt werden können.

Richtungsangaben wie "oben", "unten", "horizontal" oder "vertikal" beziehen sich soweit nicht anders angegeben auf eine bestimmungsgemäße Ausrichtung des Kultivierungssystems im Raum, wobei die Strömungsrichtung insbesondere im Wesentlichen horizontal, beispielsweise mit einem Gefälle von 0 % bis 5 %, bevorzugt von 0,5 % bis 2 %, gegenüber einer horizontalen Richtung verläuft.

Eine Strömungsrichtung mit Gefälle hat den Vorteil, dass die Nährstofflösung energiesparend von der Schwerkraft durch das Kultivierungssystem befördert wird. Das bedeutet, dass nur einmal Hebeenergie benötigt wird, beispielsweise um die Nährstofflösung mittels einer Hebeanlage in ein höhergelegenes Reservoir zu heben.

Die Durchströmung der Kultivierungsmodule mit der Nährstofflösung nach dem Schwerkraftprinzip ist aus energetischen Gesichtspunkten günstig. Zudem kann im Zusammenspiel mit einem Wasserreservoir ein Pumpenausfall (Stromausfall oder technischer Defekt) überbrückt werden. Bei Ausfällen treten Wurzelschäden durch Überhitzung oder Austrocknung daher nicht so schnell auf, da das Kultivierungssystem eine Wasserreserve bietet. Durch ein Verschließen der Entnahme-Steuervorrichtungen können weitere Reserven im Kultivierungssystem verbleiben, bis der Schaden behoben ist.

Das Entnahmemodul umfasst eine Entnahme-Steuervorrichtung zur Steuerung eines Flusses der durch das Entnahmemodul aus dem mit dem Entnahmemodul verbundenen Kultivierungsmodul entnommenen Nährstofflösung. Damit können beispielsweise der Fluss, eine Füllhöhe und/oder eine Verweildauer der Nährstofflösung in den Kultivierungsmodulen an Art und/oder Entwicklungsstadium der in den Kultivierungsmodulen kultivierten Organismen angepasst werden.

Das Entnahmemodul umfasst vorzugsweise eine Entnahme-Anschlussvorrichtung zum für die Nährstofflösung leitenden Anschluss des Entnahmemoduls an eine der Verbindungsvorrichtungen eines der Kultivierungsmodule. Die Entnahme-Anschlussvorrichtung ist vorzugsweise komplementär zu einer Verbindungsvorrichtung geformt. Die Entnahme-Anschlussvorrichtung kann beispielsweise ebenso wie eine der Verbindungsvorrichtungen ausgestaltet sein.

Mit Hilfe der Entnahme-Anschlussvorrichtung kann das Entnahmemodul einfach und sicher an ein Kultivierungsmodul angeschlossen werden.

Das Entnahmemodul kann auch in eines der Kultivierungsmodule integriert sein. In dieser Ausgestaltung ist keine Entnahme-Anschlussvorrichtung notwendig. Insbesondere kann ein Kultivierungsmodul mit integriertem Entnahmemodul mit nur einer Verbindungsvorrichtung ausgestaltet sein, sodass die Nährstofflösung durch die Verbindungsvorrichtung in das Kultivierungsmodul eingeleitet und durch das Entnahmemodul aus dem Kultivierungsmodul entnommen werden kann.

Das Entnahmemodul umfasst vorzugsweise geeignete Anschlüsse für ein Ableitungssystem, insbesondere für Rohre und/oder Schläuche, zur Ableitung der entnommenen Nährstofflösung aus dem Entnahmemodul. Die Anschlüsse können beispielsweise für die Verbindung zu PE-Rohren ausgestaltet sein.

Das Kultivierungssystem umfasst vorzugsweise zumindest ein mit einem der Kultivierungsmodule für die Nährstofflösung leitend verbundenes Einspeisemodul zur kontrollierten Einspeisung der Nährstofflösung in das Kultivierungsmodul, wobei das Einspeisemodul eine Einspeise-Steuervorrichtung zur Steuerung eines Flusses, einer Temperatur und/oder einer chemischen Zusammensetzung der durch das Einspeisemodul in das mit dem Einspeisemodul verbundene Kultivierungsmodul eingespeisten Nährstofflösung umfasst. Die Einspeise-Steuervorrichtung kann zumindest eine Pumpe zur Steuerung des Flusses der Nährstofflösung umfassen.

Mit Hilfe des Einspeisemoduls kann den Kultivierungsmodulen die Nährstofflösung, vorzugsweise automatisiert, mit für die in den Kultivierungsmodulen kultivierten Organismen geeigneten Parametern, insbesondere Fluss, Temperatur und/oder chemische Zusammensetzung, zugeführt werden.

Das Einspeisemodul kann eine Hebeanlage, beispielsweise eine Pumpe, umfassen, um die Nährstofflösung auf eine geeignete Höhe zur Einspeisung in das Kultivierungsmodul zu heben.

Wenn das Kultivierungssystem mehrere Einspeisemodule umfasst, können diese zentral oder dezentral, insbesondere autonom, gesteuert sein.

Die Steuervorrichtung kann zur automatisierten und/oder manuellen Steuerung des Flusses, der Temperatur und/oder der chemischen Zusammensetzung der Nährstofflösung ausgelegt sein.

Das Einspeisemodul kann dazu ausgelegt sein, die Kultivierungsmodule wie Fluttische in regelmäßigen Intervallen oder abhängig von Sensor-Messdaten gesteuert mit der Nährstofflösung zu fluten und/oder die Nährstofflösung kontinuierlich in die Kultivierungsmodule einzuspeisen, insbesondere für eine Tröpfchenbewässerung der Organismen.

Das Einspeisemodul kann dazu ausgelegt sein, die Nährstofflösung direkt in den Innenbehälter zumindest eines der Kultivierungsmodule einzuspeisen. Dazu kann der Innenbehälter beispielsweise an einer Oberseite eine Anzahl von Zuleitungen umfassen, durch die die Nährstofflösung über eine Anzahl von Auslässen von oben in den Innenbehälter gelangt. Die Zuleitungen können beispielsweise bezüglich der Strömungsrichtung seitlich in die Innenbehälter integriert und/oder daran angeordnet sein. Die Wasserauslässe können insbesondere verdeckt liegen und/oder mit einer Anschlussvorrichtung (zum Beispiel einem Gewinde) für eine Tröpfchenbewässerung ausgestattet sein. Die Zuleitungen können beispielsweise so ausgestaltet sein, wie die in WO 2008/084323 A2 beschriebenen Zuleitungen ("inlet ducts 11"). Die zugehörigen Seiten 5 bis 8 der Beschreibung von WO 2008/084323 A2 sind hier durch Bezugnahme aufgenommen.

Das Kultivierungssystem umfasst vorzugsweise eine Mehrzahl von Einspeisemodulen, die insbesondere eine physische Entkopplung von Teilmengen der Kultivierungsmodule in voneinander getrennte Nährstofflösungs-Kreisläufe ermöglichen. Dadurch können bei Problemen in Teilen des Kultivierungssystems, beispielsweise wenn Schaderreger oder Krankheiten auftreten, die jeweils übrigen Teile des Kultivierungssystems geschützt werden. Vorzugsweise umfasst das Kultivierungssystem ein zuschaltbares Backup-System mit alternativen Nährstoffquellen für die Organismen zur separaten Versorgung der voneinander entkoppelten Teile des Kultivierungssystems.

Das Kultivierungssystem umfasst vorzugsweise eine Mehrzahl von Einspeisemodulen und/oder Entnahmemodulen, die jeweils mit einer Teilmenge der Kultivierungsmodule für die Nährstofflösung leitend verbunden sind. Dadurch ist es möglich, Teile des Kultivierungssystems nicht gleichzeitig, sondern nacheinander mit der Nährstofflösung zu fluten, sodass eine statische Belastung eines Untergrunds des Kultivierungssystems verringert wird. Eine verringerte statische Belastung ist insbesondere bei einer Anbringung des Kultivierungssystems auf, in oder an einem Gebäude von Vorteil (zum Beispiel als Teil des inFARMING^{®}-Konzepts)).

Das Einspeisemodul umfasst vorzugsweise eine Einspeise-Anschlussvorrichtung zum für die Nährstofflösung leitenden Anschluss des Einspeisemoduls an eine der Verbindungsvorrichtungen eines der Kultivierungsmodule.

Die Einspeise-Anschlussvorrichtung ist vorzugsweise komplementär zu einer Verbindungsvorrichtung geformt. Die Einspeise-Anschlussvorrichtung kann beispielsweise ebenso wie eine der Verbindungsvorrichtungen ausgestaltet sein.

Mit Hilfe der Einspeise-Anschlussvorrichtung kann das Einspeisemodul einfach und sicher an ein Kultivierungsmodul angeschlossen werden.

Das Einspeisemodul kann auch in eines der Kultivierungsmodule integriert sein. In dieser Ausgestaltung ist keine Einspeise-Anschlussvorrichtung notwendig. Insbesondere kann ein Kultivierungsmodul mit integriertem Einspeisemodul mit nur einer Verbindungsvorrichtung ausgestaltet sein, sodass die Nährstofflösung das Einspeisemodul in das Kultivierungsmodul eingeleitet und durch die Verbindungsvorrichtung aus dem Kultivierungsmodul entnommen werden kann.

Das Einspeisemodul umfasst vorzugsweise geeignete Anschlüsse für ein Zuleitungssystem, insbesondere für Rohre und/oder Schläuche, zur Zuleitung der einzuspeisenden Nährstofflösung in das Einspeisemodul. Die Anschlüsse können beispielsweise für die Verbindung zu PE-Rohren ausgestaltet sein.

Zumindest eine der Verbindungsvorrichtungen, die Entnahme-Anschlussvorrichtung und/oder die Einspeise-Anschlussvorrichtung umfasst vorzugsweise zumindest ein Dichtelement, beispielsweise einen Dichtungsring und/oder ein Dichtungsband, zur Abdichtung der jeweiligen Verbindung für die Nährstofflösung gegenüber einer Umgebung des Kultivierungssystems. Das Dichtelement verhindert vorzugsweise ein unkontrolliertes Austreten der Nährstofflösung aus dem Kultivierungssystem.

Eine erste der Verbindungsvorrichtungen ist vorzugsweise an einer Eingangsseite zumindest eines, insbesondere jedes, der Kultivierungsmodule und eine zweite der Verbindungsvorrichtungen an einer der Eingangsseite entlang der Strömungsrichtung gegenüberliegenden Ausgangsseite des zumindest einen Kultivierungsmoduls angeordnet. Dadurch kann die Nährstofflösung an der Eingangsseite in das Kultivierungsmodul eintreten und an der Ausgangsseite aus dem Kultivierungsmodul austreten, sodass eine Vielzahl von Kultivierungsmodulen entlang der Strömungsrichtung hintereinander miteinander verbunden und widerstandsarm von der Nährstofflösung durchströmt werden können.

Insbesondere bei einem sehr langen Kultivierungsmodul kann es vorteilhaft sein, eine Verbindungsvorrichtung zur Entnahme der Nährstofflösung mittig, und jeweils eine Verbindungsvorrichtung zur Einleitung der Nährstofflösung an den beiden Enden des Kultivierungsmoduls zu platzieren. Damit kann ein besseres Ablaufverhalten erreicht werden.

Zumindest eines, insbesondere jedes, der Kultivierungsmodule kann linear aufgebaut sein, sodass die Strömungsrichtung an der Ausgangsseite des linearen Kultivierungsmoduls die gleiche ist wie an der Eingangsseite.

Die Strömungsrichtung kann an der Ausgangsseite zumindest eines der Kultivierungsmodule eine andere sein als an der Eingangsseite. Beispielsweise kann zumindest eines der Kultivierungsmodule als Winkelmodul ausgestaltet sein, das die Strömungsrichtung um einen vorbestimmten Winkel im Raum ändert.

Zumindest eines der Kultivierungsmodule kann jeweils mehrere Verbindungsvorrichtungen zur Einleitung und/oder Ausleitung der Nährstofflösung aufweisen. Beispielsweise kann zumindest eines der Kultivierungsmodule als Verzweigungsmodul mit einer Verbindungsvorrichtung zur Einleitung und zumindest zwei Verbindungsvorrichtungen zur Ausleitung oder als Vereinigungsmodul mit zumindest zwei Verbindungsvorrichtungen zur Einleitung und einer Verbindungsvorrichtung zur Ausleitung ausgestaltet sein.

Mit Hilfe von linearen Kultivierungsmodulen, Winkelmodulen, Verzweigungsmodulen und/oder Vereinigungsmodulen kann das Kultivierungssystem an die Anforderungen der kultivierten Organismen und/oder einen für das Kultivierungssystem verfügbaren Bauraum angepasst aufgebaut sein.

Das Kultivierungssystem umfasst vorzugsweise zumindest ein Sicherungselement zur mechanischen Sicherung einer Verbindung eines der Kultivierungsmodule mit einem weiteren Kultivierungsmodul, dem Entnahmemodul und/oder dem Einspeisemodul. Das Sicherungselement kann beispielsweise Teil einer der Verbindungsvorrichtungen, der Entnahme-Anschlussvorrichtung und/oder der Einspeise-Anschlussvorrichtung sein. Das Sicherungselement kann beispielsweise einen Klemmverbinder und/oder einen Rastverbinder umfassen.

Das Sicherungselement verhindert eine unbeabsichtigte Trennung der Verbindung, die beispielsweise zu einem unkontrollierten Austritt der Nährstofflösung aus dem Kultivierungssystem führen könnte.

Das Kultivierungssystem umfasst vorzugsweise eine Anzahl von Fixierungsmitteln zur Fixierung des Kultivierungssystems an einem Aufstellort. Dadurch kann beispielsweise eine unerwünschte Bewegung des Kultivierungssystems durch eine, insbesondere maschinelle, Bearbeitung vermieden werden. Die Fixierungsmittel können beispielsweise eine Anzahl von geeigneten Bodenankern, Klemmschienen und/oder Winkeln umfassen.

Das Kultivierungsmodul, das Entnahmemodul und/oder das Einspeisemodul umfasst vorzugsweise eine Anzahl von Rollen oder Rädern zur manuellen und/oder maschinellen Verschiebung des jeweiligen Moduls, beispielsweise auf einem Schienensystem, das Teil des Kultivierungssystems sein kann. Die Verschiebbarkeit ermöglicht eine platzsparenden Aufstellung in der Anzuchtphase, wenn die kultivierten Organismen noch sehr klein sind und wenig Raum beanspruchen. Zur Zu- und/oder Ableitung der Nährstofflösung kann das Kultivierungssystem flexible Leitungen umfassen, die auch bei einer Verschiebung der Module eine sichere Zu-und/oder Ableitung ermöglichen. In einer Ausgestaltung kann die Ableitung der Nährstofflösung nach dem Durchlauf durch das Kultivierungssystem über eine offen Rinne erfolgen. Diese Rinne nimmt die aus dem Entnahmemodul austretende Nährstofflösung auf und kann beispielsweise um 90° relativ zu dem Kultivierungssystem gedreht, und Teil des Schienensystems sein. Die weitere Ableitung aus der Rinne erfolgt in geeigneter Weise, vorzugsweise in einen zirkulierenden Kreislauf.

Zumindest eine der Verbindungsvorrichtungen umfasst vorzugsweise zumindest eine Durchtritts-Steuervorrichtung zur Steuerung eines Flusses der Nährstofflösung durch die Verbindungsvorrichtung. Die Durchtritts-Steuervorrichtung umfasst beispielsweise eine automatisiert und/oder manuell verstellbare Durchtritts-Klappe und/oder ein automatisiert und/oder manuell verstellbares Durchtritts-Ventil.

Mit Hilfe der Durchtritts-Steuervorrichtung können in den Kultivierungsmodulen voneinander unterschiedliche Bedingungen zur optimalen Kultivierung voneinander unterschiedlicher Organismen und/oder Entwicklungsstadien der Organismen geschaffen werden. So kann beispielsweise eine Füllhöhe mit der Nährstofflösung in einem Kultivierungsmodul in Strömungsrichtung vor der Durchtritts-Steuervorrichtung höher eingestellt werden als in einem Kultivierungsmodul hinter der Durchtritts-Steuervorrichtung.

Die Durchtritts-Steuervorrichtung erlaubt insbesondere eine kaskadierende oder gekoppelte Nährstoffnutzung durch unterschiedliche Organismen innerhalb verschiedener Bereiche des Kultivierungssystems. Die Bereiche können beispielsweise ein Dachgewächshaus und eine Fassadenbegrünung eines Gebäudes umfassen, wobei die Nährstofflösung nach einer Nutzung in dem Dachgewächshaus der Fassadenbegrünung zugeführt wird. Die Fassadenbegrünung kann in der Nährstofflösung enthaltenes Wasser vorzugsweise teilweise, insbesondere vollständig, verdunsten, sodass kein Abwasser anfällt, das aufwändig entsorgt werden müsste.

Verschiedene Organismen haben unterschiedlich hohe Nährstoffbedarfe. Vereinfacht dargestellt brauchen beispielsweise Tomaten viele Nährstoffe und Salate wenige. In dem Kultivierungssystem können zum Beispiel zunächst Organismen mit einem hohen Nährstoffbedarf und dann Organismen mit einem geringen Nährstoffbedarf versorgt werden. Man kann so eine optimale Ausnutzung der vorhandenen Nährstoffe erzielen. Insbesondere können der Nährstofflösung die Nährstoffe durch unterschiedliche Organismen so weit entzogen werden, dass die Nährstofflösung nach dem Durchlaufen des Kultivierungssystems gefahrlos in die Umwelt abgegeben werden kann, weil die Nährstofflösung dann beispielsweise nur noch aus ausreichend aufgereinigtem Wasser besteht.

Bisher brauchte man dafür verschiedene Kultursysteme, die weder praktisch anwendbar noch technisch kompatibel waren, sodass eine wirtschaftliche Nutzung nicht möglich war. Mithilfe der Durchtritts-Steuervorrichtung kann die kaskadierende Nutzung auch auf kleinem Raum erfolgen.

Der Nährstoffraum zumindest eines, insbesondere jedes, der Kultivierungsmodule ist vorzugsweise vertikal unter dem Innenbehälter und/oder beidseits quer zur Strömungsrichtung horizontal neben dem Innenbehälter angeordnet. Durch diese Ausgestaltungen entsteht eine besonders große Grenzfläche zwischen dem Nährstoffraum und dem Innenbehälter, sodass die Organismen in dem Innenbehälter besonders wirksam mit der Nährstofflösung, und durch die Sogwirkung der ablaufenden Nährstofflösung mit nachströmendem Sauerstoff versorgt werden können Darüber hinaus ist der Nährstoffraum vorzugsweise weitestgehend wurzelfrei, sodass die Nährlösung nahezu ungehindert durchströmen kann. Dies ist vorteilhaft beim Befüllen und zeigt ein besseres Ablaufverhalten als herkömmliche Systeme.

Wenn der Nährstoffraum unter dem Innenbehälter angeordnet ist, kann das Kultivierungsmodul zumindest eine, vorzugsweise strömungsgünstige, Stützvorrichtung umfassen, die den Innenbehälter unterstützt und von dem Außenbehälter beabstandet, wobei die Stützvorrichtung vorzugsweise lateral zur Strömungsrichtung an zumindest einem statisch günstigen und/oder strömungsgünstigen Punkt, beispielsweise ungefähr in der Mitte, unterhalb des Innenbehälters angeordnet ist.

Der Außenbehälter und vorzugsweise auch der Innenbehälter zumindest eines, insbesondere jedes, der Kultivierungsmodule sind vorzugsweise rinnenförmig ausgestaltet. Rinnenförmige Behälter sind an ihrer Oberseite offen, sodass ihr Innenraum, beispielsweise zur Reinigung, zur Wartung und/oder zur Pflege der Organismen leicht zugänglich ist. Ein rinnenförmiger Außenbehälter kann besonders reibungsarm von der Nährstofflösung durchströmt werden. Ein rinnenförmiger Innenbehälter kann in einem rinnenförmigen Außenbehälter besonders viel Raum zur Kultivierung der Organismen bereitstellen.

Der Außenbehälter und vorzugsweise auch der Innenbehälter zumindest eines, insbesondere jedes, der Kultivierungsmodule weisen vorzugsweise jeweils einen u-förmigen oder halbkreisförmigen Querschnitt quer zur Strömungsrichtung auf. Ein solcher Querschnitt hat den Vorteil, dass er keine Winkel aufweist, in denen sich schwer zu beseitigende Ablagerungen ansammeln können. Erfindungsgemäß ist auch ein Querschnitt mit Winkel, beispielsweise ein v-förmiger Querschnitt möglich.

Der Außenbehälter und der Innenbehälter zumindest eines, insbesondere jedes, der Kultivierungsmodule sind vorzugsweise koaxial zueinander angeordnet, sodass die Nährstofflösung von beiden Seiten der Strömungsrichtung gleichmäßig in den Innenbehälter eindringen und zu den Organismen gelangen kann.

Der Außenbehälter und vorzugsweise auch der Innenbehälter zumindest eines, insbesondere jedes, der Kultivierungsmodule sind vorzugsweise jeweils als gerade Rinne ausgebildet. Dadurch können die Behälter besonders einfach hergestellt werden, beispielsweise mit einem Extrusionsverfahren oder durch Thermoschweißen. Außerdem bietet eine gerade Rinne einen besonders geringen Flusswiderstand für die Nährstofflösung.

Der Außenbehälter und/oder Innenbehälter zumindest eines, insbesondere jedes, der Kultivierungsmodule kann als an seinen Enden offenes, teilweise geschlossenes und/oder geschlossenes Rohr, als Schlauch, als Wanne oder als Becken ausgestaltet sein. Ein Rohr kann beispielsweise einen Öffnungsmechanismus zum Öffnen des Rohrs entlang seiner Längsachse umfassen. Der Öffnungsmechanismus kann beispielsweise ein Anzahl von Scharnieren, die zwei Mantelabschnitte des Rohrs gelenkig miteinander verbinden, und/oder einen Klemmmechanismus, um das Rohr geschlossen zu halten, umfassen.

Der Außenbehälter und/oder der Innenbehälter zumindest eines, insbesondere jedes, der Kultivierungsmodule weist vorzugsweise an einer dem Nährstoffraum zugewandten Seite eine Oberflächenstrukturierung und/oder eine Oberflächenbeschichtung zur Reduzierung eines Flusswiderstands der Nährstofflösung und/oder zur Reduzierung einer Anhaftung von Mikroorganismen auf. Diese Ausgestaltungen steigern die Energieeffizienz des Kultivierungssystems und verringern die Ansiedlung von unerwünschten Mikroorganismen in dem Nährstoffraum.

Die Oberflächenstrukturierung kann beispielsweise Riblets umfassen. Die Oberflächenbeschichtung kann beispielsweise eine amorphe Kohlenstoffschicht umfassen.

Der Außenbehälter und/oder der Innenbehälter zumindest eines, insbesondere jedes, der Kultivierungsmodule umfasst vorzugsweise einen Kunststoff oder besteht daraus. Der Außenbehälter und/oder der Innenbehälter kann ein starres Material und/oder eine biegsame Folie umfassen, insbesondere daraus bestehen. Die Folie ist vorzugsweise von einer Stützstruktur, beispielsweise von einem Gerüst, aufgespannt. Eine Folie hat die Vorteile, dass sie besonders kostengünstig und materialsparend hergestellt und aufgrund ihrer geringen Masse und ihres geringen Volumens besonders einfach transportiert werden kann.

Der Außenbehälter und/oder der Innenbehälter zumindest eines, insbesondere jedes, der Kultivierungsmodule kann beispielsweise aus jedem nicht porösen oder niedrigporigem Material bestehen, das in der Lage ist, fluiden Inhalt zu halten. Geeignete Materialien umfassen eine Vielzahl von Stoffen, Verbundstoffen und/oder Kombinationen, die vorzugsweise nahezu verlustfrei recyclebar sind. Dazu gehören beispielsweise Polymere, die im trockenen Zustand biegsam sind und sich bei Kontakt mit Wasser versteifen. Dies hat den Vorteil, dass das Kultivierungssystem im trockenen Zustand leichter zu lagern und zu transportieren ist.

Wenn der Außenbehälter und/oder der Innenbehälter aus einem biegsamen Material besteht, kann er mit einer Stützstruktur, beispielsweise mit einer Reihe parallel zu dem Behälter verlaufender Gestänge und/oder Seile, so verstärkt sein, dass sich die Konstruktion selbst trägt und/oder durch zusätzliche Hilfsmittel, wie beispielsweise Seile oder Stützen, sicher befestigt werden kann. Die Stützstruktur kann eine bionische und/oder skelettartige Struktur umfassen, die im Außenbehälter und/oder im Innenbehälter ganz oder teilweise integriert sein kann. Am Außenbehälter und/oder der Innenbehälter sind vorzugsweise zu der Stützstruktur passende Befestigungselemente, wie zum Beispiel Schlaufen, Ösen und/oder Kanäle, vorgesehen.

Der Innenbehälter zumindest eines, insbesondere jedes, der Kultivierungsmodule weist vorzugsweise eine Mehrzahl von vertikal in unterschiedlicher Höhe angeordneten Durchtrittsöffnungen für die Nährstofflösung auf, wobei der Innenbehälter bevorzugt so ausgestaltet ist, dass ein Durchdringen von Pflanzenwurzeln reduziert und/oder gehemmt ist, und der Innenbehälter besonders bevorzugt zumindest abschnittsweise gitterartig gestaltet ist und/oder eine genoppte Oberfläche aufweist. Insbesondere kann der Innenbehälter zumindest abschnittsweise aus einem für die Nährstofflösung durchlässigen Material, beispielsweise Tonkeramik, bestehen. Durch die Materialbeschaffenheit und/oder die Mehrzahl von Durchtrittsöffnungen und/oder der Füllhöhe der Nährstofflösung in dem Außenbehälter kann die Menge und/oder Geschwindigkeit der eindringenden Nährstofflösung in den Innenbehälter auf einfache Weise reguliert werden.

Der Innenbehälter ist vorzugsweise lösbar mit dem Außenbehälter verbunden, damit die beiden Behälter unter anderem zur vereinfachten Reinigung oder Wartung voneinander getrennt werden können.

Der Innenbehälter zumindest eines, insbesondere jedes, der Kultivierungsmodule umfasst vorzugsweise zumindest eine Halterung zur Aufnahme von in einer Umhüllung, beispielsweise einem Substratsack, vorkonfektioniertem Substrat, wobei die Halterung vorzugsweise so gestaltet ist, dass die Halterung den Fluss der Nährstofflösung in das und aus dem Substrat nicht behindert. Die Umhüllung weist vorzugsweise eine Mehrzahl von vertikal in unterschiedlicher Höhe angeordneten Durchtrittsöffnungen für die Nährstofflösung auf, wobei die Umhüllung bevorzugt so ausgestaltet ist, dass ein Durchdringen von Pflanzenwurzeln reduziert und/oder gehemmt ist, und die Umhüllung besonders bevorzugt zumindest abschnittsweise netzartig gestaltet ist.

Der Außenbehälter und/oder der Innenbehälter zumindest eines, insbesondere jedes, der Kultivierungsmodule umfasst vorzugsweise eine, vorzugsweise lösbar mit dem jeweiligen Behälter verbundene, Abdeckung. Die Abdeckung ist beispielsweise dazu ausgelegt, auf und/oder an dem Innenbehälter und/oder Außenbehälter mittels Befestigungselementen fixiert zu werden. Die Befestigungselemente können beispielsweise Haken, Schlaufen, Clips und/oder Magnete umfassen.

Die abnehmbare Abdeckung ermöglicht einen besseren Wartungszugang zum Inneren des Behälters und kann zum Beispiel aus einer Folie und/oder einem starren Material bestehen.

Die Abdeckung kann zum Beispiel mit Aussparungen zur Aufnahme von Kulturtöpfen für die kultivierten Organismen versehen sein. Die Abdeckung kann eine Folie umfassen, in der Anwender des Kultivierungssystems die Aussparungen, beispielsweise entlang einer Perforation oder durch Schneiden, herstellen können. Die Aussparungen können auch wiederverschließbare Verbindungen umfassen, um Wasserverluste oder Kontaminationen der Nährstofflösung zu verhindern.

Das Kultivierungssystem kann eine lichtdurchlässige, insbesondere transparente, Überdachung für zumindest einen Innenbehälter, zumindest ein Kultivierungsmodul und/oder für das ganze Kultivierungssystem umfassen. Die Überdachung ist vorzugsweise lösbar mit dem Innenbehälter, dem Kultivierungsmodul und/oder dem Kultivierungssystem verbunden. Die Verbindung kann wie zur Abdeckung beschrieben ausgestaltet sein. Mit Hilfe der Überdachung kann eine kontrollierte Umgebung zur Kultivierung der Organismen wie in einem Gewächshaus geschaffen werden.

Der Innenbehälter zumindest eines, insbesondere jedes, der Kultivierungsmodule enthält vorzugsweise ein luftdurchlässiges, insbesondere für Stickstoff, Sauerstoff, Kohlenstoffdioxid und/oder Wasserdampf durchlässiges, und wasserdurchlässiges Substrat für die Organismen. Durch ein wasserdurchlässiges Substrat kann die Nährstofflösung zu den Organismen gelangen. Ein luftdurchlässiges Substrat hat den Vorteil, dass Fäulnis in dem Substrat vermieden wird und gasförmige Stoffwechselprodukte der Organismen, beispielsweise Kohlenstoffdioxid, entweichen können.

Bekannte Substrate für Hydroponik- und Hydrokultursysteme sind darauf ausgelegt, wasserspeichernd und luftdurchlässig zu sein. Das Substrat des erfindungsgemäßen Kultivierungssystems ist vorzugsweise wasserdurchlässig und luftdurchlässig.

Das Substrat umfasst bevorzugt Kies, ist kalkfrei und/oder hat eine Korngröße von 4 mm bis 8 mm. Versuche haben ergeben, dass sich Kies, insbesondere mit den genannten Eigenschaften, besonders gut für das Kultivierungssystem eignet, da er beispielsweise einen Selbstreinigungseffekt durch ablaufende Nährstofflösung zeigt.

Alternativ oder ergänzend zu Kies kann das Substrat organischen, anorganischen, metallischen, nichtmetallischem, keramischen oder siliziumbasierten Ursprungs sein und/oder ganz oder teilweise aus Verbindungen hiervon und/oder aus Mischungen verschiedener Substrate bestehen. Vorzugsweise werden als Substrat Glaskörper, insbesondere lichtundurchlässige Glaskörper und/oder Glaskugeln, verwendet, die beispielsweise aus granuliertem und/oder gebrochenem und besonders bevorzugt geschliffenen Alt- und/oder Recyclingglas bestehen. Glaskörper eignen sich als Substrat besser als Kies, weil sie weniger Abrieb, ein höheres Porenvolumen und ein geringeres Schüttgewicht aufweisen. Zur weiteren Gewichtsersparnis können die Glaskörper Gaseinschlüsse, insbesondere Lufteinschlüsse, umfassen, deren Volumenanteil so gewählt ist, dass die Glaskörper noch ausreichend schwer sind, um in der Nährstofflösung nicht aufzuschwimmen.

Die Erfindung betrifft auch das hier beschriebene Substrat und dessen Verwendung unabhängig von dem erfindungsgemäßen Kultivierungssystem, insbesondere eine Verwendung des Substrats in einer Kultivierungsvorrichtung aus dem Stand der Technik.

Das Substrat gibt den Organismen in dem Innenbehälter den notwendigen Halt, um sich entwickeln zu können. Zusätzlich oder alternativ zu dem Substrat kann das Kultivierungssystem geeignete Stütz- und/oder Haltevorrichtungen für die Organismen umfassen. Die Haltevorrichtungen können freistehend und/oder hängend und/oder mit zumindest einem der Kultivierungsmodule verbunden sein.

Die Haltevorrichtungen können beispielsweise Tomatenhaken zur Unterstützung des oberen Pflanzenteils kultivierter Pflanzen umfassen und/oder den Wurzelbereich der Pflanzen mittels einer lösbaren Klemme außerhalb und/oder innerhalb des Innenbehälters und/oder im Nährstoffraum fixieren.

Die Wahl des Substrats hängt von der jeweiligen Kultur ab und kann in unterschiedlichen Arten und Mischungen vorliegen. Erdelose Substrate sind weniger anfällig für bodenbürtige Schadorganismen. Dies stellt jedoch kein Ausschlusskriterium für erdhaltige Substrate dar.

Zumindest eines, insbesondere jedes, der Kultivierungsmodule ist vorzugsweise dazu ausgelegt, mit vorkonfektioniertem umhüllten Substrat, oder mit von Substrat befüllten Innenbehältern bestückt zu werden. Das Substrat ist bevorzugt mit Samen versehen. Das Substrat und/oder die Samen können vorgedüngt oder nicht vorgedüngt sein. Das Substrat kann beispielsweise agglomeriert, verpresst und/oder mit einer Trägerschicht versehen sein. Die Trägerschicht kann beispielsweise ein Netz, eine Gaze oder einen Filz umfassen, um die Samen zu fixieren und/oder einen ausreichenden Feuchtetransport zu gewährleisten, der einer Keimung der Samen zuträglich ist.

Das Kultivierungssystem ist auch ohne Substrat verwendbar. Dafür umfasst zumindest eines, vorzugsweise jedes, der Kultivierungsmodule vorzugsweise eine Abdeckung des Innenbehälters, insbesondere mit zumindest einer Aussparung für die Organismen, und/oder eine Haltevorrichtung zur Halterung der Organismen. Die Abdeckung kann mit dem Innenbehälter und/oder dem Außenbehälter lösbar oder unlösbar verbunden sein. Eine Abdeckung zumindest des Innenbehälters ist auch bei einer Verwendung mit Substrat von Vorteil, um das Substrat vor Aufwuchs und/oder Veralgung zu schützen.

Der Innenbehälter zumindest eines, vorzugsweise jedes, der Kultivierungsmodule kann zumindest eine Markierung oder mehrere Markierungen zur Kennzeichnung einer optimalen Füllhöhe des Innenbehälters mit dem Substrat umfassen.

Der Innenbehälter und der Außenbehälter zumindest eines, vorzugsweise jedes, der Kultivierungsmodule umschließen den Nährstoffraum vorzugsweise lichtdicht, flüssigkeitsdicht und/oder gasdicht, wobei der Innenbehälter bevorzugt über ein Dichtelement lichtdicht, flüssigkeitsdicht und/oder gasdicht und besonders bevorzugt lösbar mit dem Außenbehälter verbunden ist. Eine lichtdichte Umschließung verringert das Wachstum von Algen und anderen unerwünschten Organismen in dem Nährstoffraum. Eine flüssigkeitsdichte und/oder gasdichte Umschließung verringert unerwünschte äußere Einwirkungen auf die Organismen und/oder das Kultivierungssystem oder schließt diese aus. Aus gestalterischen und/oder pflanzenbaulichen Aspekten und/oder zur Beobachtung des Inhalts des Kultivierungsmoduls kann zumindest eines, vorzugsweise jedes, der Kultivierungsmodule teilweise oder vollständig transparent, durchscheinend, selektiv absorbierend und/oder reflektierend beschaffen sein.

Das Kultivierungssystem umfasst vorzugsweise eine Anzahl von Überwachungselementen, die vorzugsweise alle Belange der Kultivierung der Organismen unterstützen. Hierzu gehören beispielsweise Überwachungselemente zur visuellen und/oder elektronischen Überwachung, die im und/oder an zumindest einem der Kultivierungsmodule und/oder einem Computergerät angeordnet und/oder damit verbunden sind. Die Überwachungselemente umfassen zum Beispiel, insbesondere flexible, elektronische Schaltungen und Geräte, wie Sensoren, Transponder, RFID-Tags und intelligente Materialien oder Barcodes. Die Überwachungselemente dienen zum Beispiel zur Überwachung der Nährstofflösung, bevorzugt zur Überwachung einer chemischen Zusammensetzung, eines pH-Werts, einer Temperatur und/oder einer Füllhöhe der Nährstofflösung in zumindest einem, insbesondere jedem, der Kultivierungsmodule.

Die Füllhöhe kann beispielsweise mit einer Mehrzahl von in unterschiedlichen Höhen in dem Nährstoffraum eines Kultivierungsmoduls angeordneten Flüssigkeitssensoren umfassen. Beispielsweise kann ein Flüssigkeitssensor oberhalb eines maximalen Füllstands zur Ermittlung von Staunässe und/oder ein Flüssigkeitssensor unterhalb eines minimalen Füllstands zur Ermittlung von Trockenheit an dem Außenbehälter und/oder Innenbehälter des Kultivierungsmoduls positioniert sein.

Das Kultivierungssystem kann ein Computergerät zur Aufnahme, Auswertung und/oder Speicherung von Messdaten der Überwachungselemente umfassen. Das Computergerät kann zur Ausgabe einer Warnmeldung an einen Benutzer des Kultivierungssystems bei Abweichungen von Messdaten von zugehörigen Soll-Daten ausgelegt sein.

Das Computergerät kann zur Steuerung von einer Anzahl von Aktoren des Kultivierungssystems auf Basis der Messdaten ausgelegt sein. Die Aktoren können beispielsweise die Einspeise-Steuervorrichtung, die Entnahme-Steuervorrichtung und/oder die Durchtritts-Steuervorrichtung des Kultivierungssystems umfassen.

Die Entnahme-Steuervorrichtung umfasst einen Bell-Siphon mit einer höhenverstellbaren Eingangsöffnung für die Nährstofflösung. Die Höhenverstellung kann manuell und/oder automatisiert sowie zentral und/oder dezentral gesteuert erfolgen. Die Entnahme-Steuervorrichtung kann eine Einstellhilfe, insbesondere eine Skala, zum Überprüfen der Höheneinstellung enthalten.

Der Bell-Siphon entleert selbsttätig ohne Energiezufuhr, ein sich mit einer Flüssigkeit füllendes Behältnis. Dies ist bei einer definierten Füllhöhe durch den sogenannten "Venturi-Effekt" möglich. Dabei besteht im Inneren des Siphons so lange ein Unterdruck, bis keine Flüssigkeit mehr nachströmt und den Effekt beendet. Bei der Entleerung großer mit Substrat gefüllter Becken ergibt sich mit üblichen Hebern das Problem, dass das nachlaufende Medium aus der Fläche zeitverzögert am Ablauf eintrifft. Dies kann zur Folge haben, dass der Entleerungsvorgang nicht unterbricht und ein erneuter Flutvorgang verhindert wird. Darüber hinaus sind Änderungen der Füllstände nur durch umständliche bauliche Veränderungen oder einem Austausch des Siphons möglich.

Vorgenannte Probleme werden durch eine höhenverstellbare Eingangsöffnung gelöst. Diese besteht vorzugsweise aus einer Grundplatte, die besonders bevorzugt an ihren Rändern einen Kragen mit Gewinde trägt. Dort kann besonders bevorzugt ein Rohr mit komplementärem Gewinde aufgeschraubt und in der Höhe verstellt werden. Dadurch wird die niedrigste Eintrittshöhe der Nährlösung bestimmt. Durch den nun zusätzlich geschaffenen Raum um den Siphon kann der Entleerungsvorgang sicher unterbrochen werden. Dieser Raum entleert sich schneller als langsam nachfließendes Wasser aus dem Kultivierungsmodul eintreffen kann. Ein zuverlässig festzulegender minimaler Füllstand bietet Schutz vor Austrocknung. Darüber hinaus bietet die Grundplatte dem Siphon eine sichere Standfläche, wodurch sein möglicher Einsatzbereich erweitert wird. In einer einfachen Ausgestaltung kann die Eingangsöffnung feststehend sein.

Ergänzend kann die Austrittsöffnung verstellbar gestaltet sein. Ergänzend kann die Austrittsöffnung höhenverstellbar gestaltet sein. Zur Verstellung der Austrittsöffnung wird beispielsweise die Glocke des Siphons in der Höhe justiert. Das mit der Glocke verbundene Innenrohr verändert entsprechend seine Höhe, um den sicheren Ablauf der Nährlösung zu gewährleisten. Die Höhenverstellung kann manuell oder automatisiert erfolgen. Diese Einstellmöglichkeit verhindert ein Überlaufen des Kultivierungsgeräts und Algenwuchs an der Substratoberfläche. Zudem werden optimale Versorgungsbedingungen für jede Kultur geschaffen, besonders zur Keimung nach der Aussaat, oder Anpflanzung.

Die Eingangsöffnung des Bell-Siphons ist vorzugsweise von einem Schutzgitter eingehegt, um eine Verstopfung des Bell-Siphons durch von der Nährstofflösung möglicherweise mitgeführte Fremdkörper, beispielsweise Pflanzenteile, zu vermeiden.

Der Bell-Siphon ist vorzugsweise durch eine belüftete Wartungsklappe verdeckt, um ihn vor Beschädigungen zu schützen.

Das Kultivierungssystem kann eine Anzahl von Führungsschienen und/oder Rückhaltevorrichtungen und/oder Auffangvorrichtungen für das Substrat umfassen, die eine maschinelle Bearbeitung der Organismen und des Kultivierungssystems unterstützen. Die Führungsschienen unterstützen beispielsweise das punktgenaue Einsetzen einer Saatmaschine zum Einsäen in das Kultivierungssystem, indem ein Sensorsignal an die Maschine ausgegeben wird. Durch Direktsaat kann eine kostenintensive externe Vorzucht und das Umpflanzen entfallen, gleichzeitig werden Anwachsverluste ausgeschlossen.

Ein erfindungsgemäßes Kultivierungssystem umfasst vorzugsweise eine Vorrichtung zur Gaseinströmung an die Organismen, in die Nährstofflösung und/oder in das Substrat, beispielsweise zur Einströmung von Sauerstoff oder wachstumsfördernden Gasen, insbesondere Kohlenstoffdioxid (CO₂). Ein Einströmen von Kohlenstoffdioxid senkt den pH-Wert der Nährstofflösung und verbessert dadurch das Pflanzenwachstum. Darüber hinaus verbessert eine atmosphärische Behandlung mit CO₂ das Wachstum der Pflanzen. Sollte das Kultivierungssystem in einen Aquaponik-Kreislauf eingebunden sein, ist vorzugsweise vor der Einleitung der Nährstofflösung in eine Aquakultur eine geeignete Vorrichtung, vorzugsweise ein kaskadierender Wasserfall vorgesehen, um noch enthaltenes CO₂ aus der Nährstofflösung auszutreiben.

Energiekosten haben an den Produktionskosten kultivierter Organismen einen hohen Anteil. Das Kultivierungssystem verringert Heizenergiekosten, indem es die Funktion eines Wärmespeichers übernimmt. Die Nährstofflösung nimmt beispielsweise am Tag Wärmeenergie aus der Luft auf und gibt sie in der kühleren Nacht wieder ab. Dies schützt die Organismen vor Temperaturstress, und die Organismen können bereits früher am Morgen mit dem Stoffwechsel beginnen. Eine weitere erfindungsgemäße Nutzung des Kultivierungssystems ist es beispielsweise, Wärme von einem externen Heiz- und/oder Kühlsystem auf die Nährstofflösung zu übertragen oder umgekehrt. Dies kann beispielsweise durch in zumindest eines der Kultivierungsmodule und/oder in ein Reservoir für die Nährstofflösung eingelegte Schläuche, in denen ein Wärmetransportmittel des externen Heiz- und/oder Kühlsystems zirkuliert, erfolgen. Insbesondere durch gegenläufige Strömungsrichtungen kann so Energie von dem Wärmetransportmittel auf die Nährstofflösung oder umgekehrt übertragen werden. Durch eine günstige Ausgestaltung des Kultivierungssystems, bzw. der Schläuche mit einer möglichst großen Grenzfläche zu der Umgebung, bzw. der Nährstofflösung kann die Energieübertragung zwischen den Medien verbessert werden.

Das Kultivierungssystem ist ressourcenschonend durch seine vielfache Wiederverwendbarkeit von Produkt und Substrat. Die Entsorgungskosten für große Mengen problematischer Abfälle wie beispielsweise Steinwolle und Folien entfallen.

Die Erfindung betrifft ein Verfahren zur Kultivierung, insbesondere Hydroponik, von prokaryotischen und/oder eukaryotischen Organismen, insbesondere Pflanzen, mit einer Nährstofflösung, in einem erfindungsgemäßen Kultivierungssystem.

Das Verfahren kann insbesondere bereits im Zusammenhang mit dem Kultivierungssystem beschriebene Ausgestaltungen umfassen, woraus sich die dort genannten Vorteile ergeben.

Das Verfahren umfasst vorzugsweise Aquaponik und/oder eine Verwertungen von aufbereiteten Abwässern, bevorzugt in einem geschlossenen Kreislaufsystem.

Das Verfahren umfasst vorzugsweise ein Einbringen von Organismen, insbesondere Pflanzen und/oder Samen, in den Innenbehälter zumindest eines Kultivierungsmoduls des Kultivierungssystems und vorzugsweise ein Versorgen des Innenbehälters mit Wasser, Sauerstoff und/oder Nährstoffen zur Unterstützung des Wachstums der Organismen.

Das Verfahren umfasst vorzugsweise ein Überwachen der Organismen und/oder von Kultivierungsbedingungen in dem Kultivierungssystem und optional ein Anpassen der Innenbehälter und/oder ihres Inhalts, um das Wachstum der Organismen oder von Teilen davon zu optimieren.

Das Verfahren umfasst vorzugsweise ein sequentielles Fluten jeweils einer Teilmenge der Kultivierungsmodule des Kultivierungssystems mit der Nährstofflösung. Dadurch, dass nicht alle Kultivierungsmodule gleichzeitig, sondern abwechselnd und/oder nacheinander geflutet werden, wird eine Flächenbelastung eines Untergrunds des Kultivierungssystems reduziert.

Vorzugsweise werden die Kultivierungsmodule in definierbaren Zeitabständen über eine einstellbare Dauer und Fluthöhe bis unterhalb einer Substratoberkante geflutet. Der Zulauf der Nährstofflösung in ein Kultivierungsmodul und der Ablauf der Nährstofflösung aus dem Kultivierungsmodul können dabei durch die gleiche Verbindungsvorrichtung oder durch voneinander verschiedene Verbindungsvorrichtungen erfolgen. Das regelmäßige Fluten reduziert die Verdunstung erheblich und führt nicht zu einer schädlichen Akkumulation von Salzen an der Substratoberfläche. Oberirdische Pflanzenteile und Früchte kommen nicht mit der Nährlösung in Kontakt was vorteilhaft ist, wenn aufbereitetes Abwasser mikrobiell nicht rein ist. Während des Flutvorgangs werden die substratständigen Wurzeln der Pflanzen und/oder andere Organismen von der Nährstofflösung umspült und es kommt dabei zum Nährstoffentzug aus der Nährstofflösung.

Die ablaufende Nährstofflösung gelangt beispielsweise wieder zurück in ein Reservoir, sodass die Nährstofflösung erneut verwendet werden kann. Der Ablauf der Nährstofflösung kann auf verschiedene Arten erfolgen.

Eine Nutzungsmöglichkeit des Kultivierungssystems ist die Verwendung zur Modifikation fließfähiger Medien. Substanzen in einem fließendem Medium können innerhalb des Kultivierungssystems durch Organismen und/oder Substrate festgehalten, gebunden, eliminiert und/oder besonders gut abtransportiert werden. Beispielsweise kann nach einer Zeit ein mit Substanzen gesättigtes Substrat auf einfache Art aus dem Kultivierungssystem entnommen, regeneriert oder entsorgt werden.

Das Verfahren kann eine Kultivierung von halophilen oder halotoleranten Organismen, beispielsweise Muscheln oder Wasserpflanzen, insbesondere in Form von Aquakultur oder Aquaponik, umfassen. Mit dem Kultivierungssystem lassen sich Gezeitenströmungen simulieren, wodurch es sich besonders gut für die Kultivierung von Organismen eignet, die eine Umgebung mit wechselnden Lebensbedingungen bevorzugen.

Das Verfahren umfasst vorzugsweise ein sequentielles Fluten von Kultivierungsmodulen des Kultivierungssystems, vorzugsweise in Form einer Nutrient Film Technique (NFT), einer Deep Flow Technique (DFT) oder einer Deep Water Culture (DWC). Durch regelmäßiges Fluten wird einer Verstopfung der Kultivierungsmodule und einer Überhitzung des Nährstofffilms bei NFT vorgebeugt. Bei der DFT und DWC lässt sich durch ein sequenzielles Fluten von Teilmengen der Kultivierungsmodule das Flächengewicht reduzieren und zugleich eine effektive Belüftung des Wurzelbereichs kultivierter Pflanzen erreichen. Bei der DWC sinken die Flöße hierbei vorzugsweise nicht bis auf den Boden des Kultivierungsmoduls ab, sondern werden durch eine tragende Unterkonstruktion in der Schwebe gehalten, sodass die Wurzeln der Pflanzen ausreichend Raum zur Verfügung haben. Die Unterkonstruktion ist vorzugsweise so gestaltet, dass das freie Flottieren der Flöße im Flutmodus nicht beeinträchtigt wird.

Das Verfahren umfasst vorzugsweise eine maschinelle, insbesondere automatisierte, Kultivierung der Organismen, umfassend beispielsweise ein Säen, Pflanzen, Pflegen und/oder Ernten der Organismen, ein Einsetzen und/oder Entnehmen von Innenbehältern und/oder Substrat, eine Aufbereitung des Substrats und/oder eine Reinigung und/oder Desinfektion der Kultivierungsmodule, insbesondere der Innenbehälter.

Die potenziell endlose Bauweise des Kultivierungssystems vereinfacht den Einsatz kostengünstiger Bearbeitungsmaschinen und ermöglicht eine rationelle Arbeitsweise. Aufgrund seiner modularen Bauweise eignet sich das Kultivierungssystem für nahezu alle Kulturen. Ein Kulturwechsel kann ohne neue Investitionskosten erfolgen. Alle Teile sind wiederverwendbar und das Substrat ist leicht zu reinigen.

Das Kultivierungssystem ist universell verwendbar: Hydroponik, Aquaponik, Aufbereitung von Brauchwasser, Wasseraufbereitung. Durch die vielfältigen Kombinationsmöglichkeiten der Regulation von Fluthöhe, Durchflussgeschwindigkeit, -menge, Intervallen, Verweilzeiten und Substraten lassen sich viele Organismen kultivieren. Im Substrat finden Wurzeln einen sicheren Halt, was die Handhabung bei Großpflanzen robuster macht. Dabei wird jedoch nicht der Wasserfluss behindert und durch die unbelichtete Wasserführung wird Algenwuchs dort, dort wo er nicht erwünscht ist, ohne zusätzliche Maßnahmen verhindert. Mittels intelligenter Wassersteuerung kann das Gesamtflächengewicht reduziert werden, womit das System auch auf Dachflächen oder in Gebäuden genutzt werden kann.

Um das erfindungsgemäße Kultivierungsgerät zur Aquaponik zu verwenden, kann ein hoher Wasserdurchsatz mit variabler Verweilzeit in der Pflanzenkultur eingestellt werden. Die Führung der Nährstofflösung durch das Kultivierungssystem gewährleistet eine gleichmäßige Verteilung der Nährstofffracht und begünstigt den Nährstoffentzug durch die Pflanzen. Beim Ablauf der Nährstofflösung werden die Wurzeln automatisch mit Luftsauerstoff versorgt und damit Fäulnis unterbunden. Im Gegensatz zu herkömmlichen Methoden ist kein energetischer Aufwand zur Belüftung der Wurzeln notwendig.

Somit ist das bei bekannten Aquaponik-Anlagen bestehende Problem der Trennung der Nährstofflösungskreisläufe für die Fisch- und Pflanzenzucht überwunden, und mit dem erfindungsgemäßen Kultivierungssystem eine Lösung der ökologischen Problematik der Überdüngung natürlicher Gewässer, durch Abwasser von Aquakulturen herbeigeführt.

Ferner ist unter diesen Bedingungen mit kaum auftretenden Wurzel- oder Boden-Schadorganismen zu rechnen. Hierdurch werden kostenintensive Pflanzen- und Arbeitsschutzmittel eingespart, was auch der Gesundheit der Angestellten entgegenkommt.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt eine schematische Aufsicht eines erfindungsgemäßen Kultivierungssystems.
Figur 2 zeigt eine schematische Vertikal-Längsschnitt des Kultivierungssystems aus Figur 1.
Figur 3 zeigt einen schematischen Querschnitt eines Kultivierungsmoduls eines erfindungsgemäßen Kultivierungssystems.
Figur 4 zeigt einen schematischen Querschnitt eines weiteren Kultivierungsmoduls eines erfindungsgemäßen Kultivierungssystems.
Figur 5 zeigt schematisch eine Anordnung mehrerer Innenbehälter 120 in einem Außenbehälter.

### Fig.1

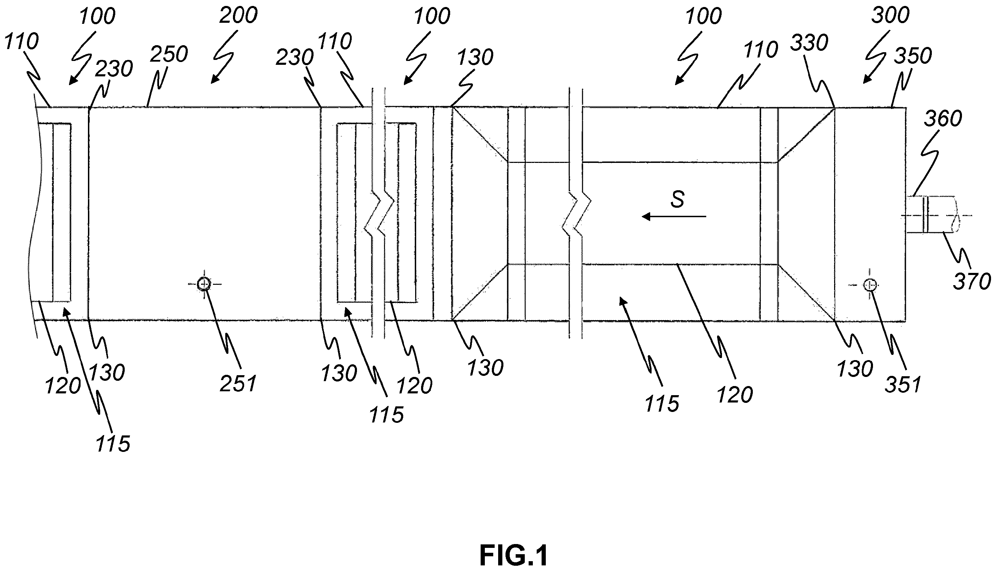

Figur 1 zeigt eine schematisch Aufsicht eines erfindungsgemäßen Kultivierungssystems zur hydroponischen Kultivierung von Organismen (nicht dargestellt) mit einer Nährstofflösung (nicht dargestellt) für die Organismen. Das gezeigte Kultivierungssystem umfasst eine Mehrzahl von für die Nährstofflösung leitend miteinander verbundenen Kultivierungsmodulen 100 zur Aufnahme der Organismen und ein mit einem der Kultivierungsmodule 100 für die Nährstofflösung leitend verbundenes Entnahmemodul 200 zur kontrollierten Entnahme der Nährstofflösung aus dem Kultivierungsmodul 100. Insbesondere kann an einander gegenüberliegenden Seiten des Entnahmemoduls 200 jeweils ein Kultivierungsmodul 100 mit dem Entnahmemodul 200 verbunden sein.

Das Kultivierungssystem umfasst ein mit einem der Kultivierungsmodule 100 für die Nährstofflösung leitend verbundenes Einspeisemodul 300 zur kontrollierten Einspeisung der Nährstofflösung in das Kultivierungsmodul 100.

Die Kultivierungsmodule 100 umfassen jeweils einen Außenbehälter 110 zur Durchströmung mit der Nährstofflösung in einer Strömungsrichtung S, einen in dem Außenbehälter 110 angeordneten Innenbehälter 120 zur Aufnahme der Organismen, und zwei Verbindungsvorrichtungen 130 zur für die Nährstofflösung leitenden Verbindung des Außenbehälters 110 mit dem Außenbehälter 110 eines weiteren Kultivierungsmoduls 100 oder mit dem Entnahmemodul 200.

Der Innenbehälter 120 ist für die Nährstofflösung durchlässig, beispielsweise gitterartig, ausgestaltet.

Zwischen dem Außenbehälter 110 und dem Innenbehälter 120 ist beidseits quer zur Strömungsrichtung S horizontal neben dem Innenbehälter 120 und unter dem Innenbehälter 120 ein Nährstoffraum 115 zur Durchströmung mit der Nährstofflösung angeordnet.

Das Entnahmemodul 200 umfasst zumindest eine Entnahme-Anschlussvorrichtung 230 zum für die Nährstofflösung leitenden Anschluss des Entnahmemoduls 230 an eine der Verbindungsvorrichtungen 130 eines der Kultivierungsmodule 100.

Das Entnahmemodul 200 ist von einer Wartungsklappe 250 abgedeckt. Die Wartungsklappe 250 kann eine Belüftungsöffnung 251 aufweisen, die auch als Griffloch dienen kann.

Das Einspeisemodul 300 umfasst eine Einspeise-Anschlussvorrichtung 330 zum für die Nährstofflösung leitenden Anschluss des Einspeisemoduls 300 an eine der Verbindungsvorrichtungen 130 eines der Kultivierungsmodule 100.

Das Einspeisemodul 300 ist von einer Wartungsklappe 350 abgedeckt. Die Wartungsklappe 350 kann eine Belüftungsöffnung 351 aufweisen, die auch als Griffloch dienen kann. Das Einspeisemodul 300 umfasst einen Anschluss 360 für ein Zuleitungssystem 370 zur Zuleitung der einzuspeisenden Nährstofflösung in das Einspeisemodul 300.

Das Einspeisemodul 300, die Kultivierungsmodule 100 und das Entnahmemodul 200 sind beispielsweise entlang der Strömungsrichtung S linear hintereinander angeordnet. Die Strömungsrichtung S ist beispielsweise im Wesentlichen horizontal, insbesondere mit einem Gefälle von 0 % bis 5 %.

### Fig.2

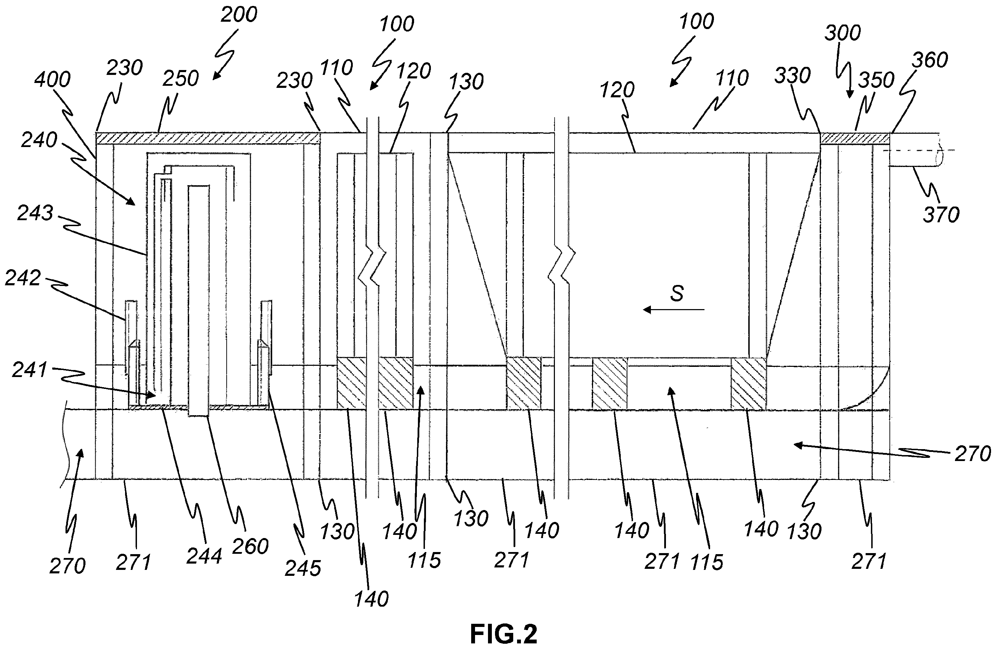

Figur 2 zeigt einen schematischen Vertikal-Längsschnitt des Kultivierungssystems aus Figur 1 entlang einer vertikalen Schnittebene parallel zur Strömungsrichtung S.

Das dargestellte Kultivierungsmodul 100 umfasst eine Anzahl von, beispielsweise drei, Stützvorrichtungen 140, die den Innenbehälter 120 unterstützen und von dem Außenbehälter 110 beabstanden. Die Stützvorrichtungen 140 sind beispielsweise lateral zur Strömungsrichtung S in der Mitte unterhalb des Innenbehälters 120 angeordnet.

Das Entnahmemodul 200 umfasst eine Entnahme-Steuervorrichtung 240 zur Steuerung eines Flusses der durch das Entnahmemodul 200 aus dem mit dem Entnahmemodul 200 verbundenen Kultivierungsmodul 100 entnommenen Nährstofflösung.

Die Entnahme-Steuervorrichtung 240 umfasst einen Bell-Siphon mit einer höhenverstellbaren Eingangsöffnung 241 für die Nährstofflösung. Die höhenverstellbare Eingangsöffnung 241 umfasst beispielsweise ein um die Eingangsöffnung 241 angeordnetes, vertikal ausgerichtetes und höhenverstellbares Rohr 242. Das Rohr 242 ist beispielsweise höhenverstellbar an einer Grundplatte 244 befestigt. Die Grundplatte 244 trägt bevorzugt an ihren Rändern einen Kragen 245 mit einem Gewinde, auf das das Rohr 242 aufgeschraubt ist.

Die Eingangsöffnung 241 ist von einem Schutzgitter 243 zum Schutz des Bell-Siphons vor Fremdkörpern umgeben.

Das Entnahmemodul 200 umfasst einen Anschluss 260 für ein Ableitungssystem 270 zur Ableitung der entnommenen Nährstofflösung aus dem Entnahmemodul 200. Das Ableitungssystem 270 umfasst beispielsweise eine Anzahl von in die Kultivierungsmodule 100, das Einspeisemodul 300 und/oder das Entnahmemodul 200 integrierten und über die Verbindungsvorrichtungen 130, Entnahme-Anschlussvorrichtungen 230 und/oder Einspeise-Anschlussvorrichtungen 330 miteinander verbundenen Rohrleitungen 271.

Verbindungsvorrichtungen 130, Entnahme-Anschlussvorrichtungen 230 und/oder Einspeise-Anschlussvorrichtungen 330, an die kein die Kultivierungsmodul 100, Einspeisemodul 300 oder das Entnahmemodul 200 angeschlossen ist, können jeweils mit einer Endkappe 400 für die Nährstofflösung dicht verschlossen sein.

### Fig.3

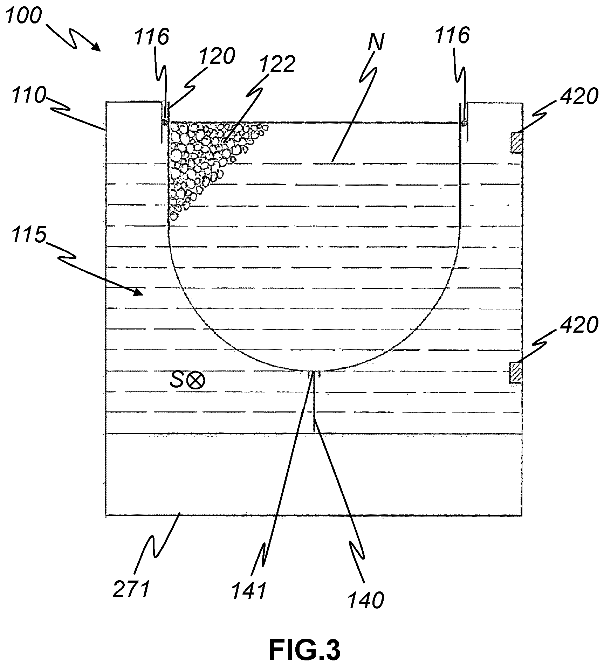

Figur 3 zeigt einen schematischen Querschnitt eines Kultivierungsmoduls 100 eines erfindungsgemäßen Kultivierungssystems entlang einer vertikalen Schnittachse senkrecht zur Strömungsrichtung S.

Der Außenbehälter 110 und der Innenbehälter 120 sind rinnenförmig, beispielsweise in Form einer geraden Rinne, wobei beispielsweise der Außenbehälter 110 einen rechteckigen Querschnitt quer zur Strömungsrichtung S und der Innenbehälter 120 einen u-förmigen Querschnitt hat.

Der Innenbehälter 120 des gezeigten Kultivierungsmoduls 100 enthält ein luftdurchlässiges und wasserdurchlässiges Substrat 122 für die Organismen, beispielsweise kalkfreien Kies mit einer Korngröße von 4 mm bis 8 mm.

Der Innenbehälter 120 und der Außenbehälter 110 des Kultivierungsmoduls 100 umschließen den Nährstoffraum 115 lichtdicht, wobei der Innenbehälter 120 über ein Dichtelement 116 lichtdicht mit dem Außenbehälter 110 verbunden ist.

Der Innenbehälter 120 ist für die Nährstofflösung N durchlässig, sodass die Nährstofflösung N zu den Organismen gelangen kann.

Das Kultivierungsmodul 100 umfasst eine Anzahl von Überwachungselemente420 zur Überwachung einer Füllhöhe der Nährstofflösung N in dem Kultivierungsmodul 100. Die Überwachungselemente420 umfassen beispielsweise zwei Flüssigkeitssensoren, von denen einer oberhalb eines maximalen Füllstands zur Ermittlung von Staunässe und einer unterhalb eines minimalen Füllstands zur Ermittlung von Trockenheit an dem Außenbehälter 110 des Kultivierungsmoduls 100 positioniert ist.

Der Innenbehälter 120 umfasst vorzugsweise ein Fixierungselement 141 zur Fixierung der Stützvorrichtung 140 an dem Innenbehälter 120, beispielsweise durch eine Rastverbindung.

### Fig.4

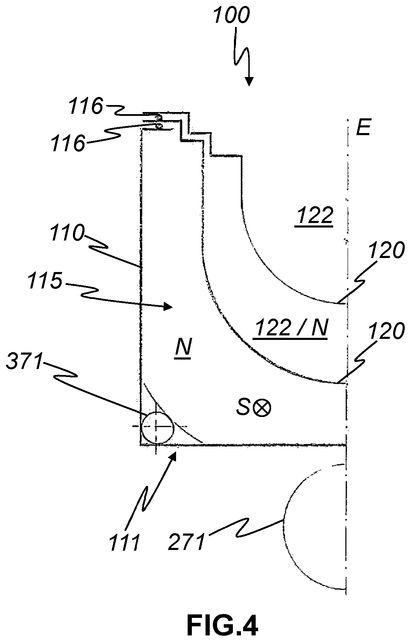

Figur 4 zeigt einen schematischen Querschnitt eines weiteren Kultivierungsmoduls 100 eines erfindungsgemäßen Kultivierungssystems entlang einer vertikalen Schnittachse senkrecht zur Strömungsrichtung S. Der Übersichtlichkeit halber ist nur eine Hälfte des Kultivierungsmoduls 100 gezeigt. Die andere Hälfte kann bezüglich der Symmetrieebene E spiegelsymmetrisch zu der gezeigten Hälfte ausgestaltet sein.

Im Unterschied zum in Figur 3 gezeigten Kultivierungsmodul 100 umfasst das in Figur 4 gezeigte Kultivierungsmodul 100 zwei ineinander angeordnete Innenbehälter 120, von denen der innere über ein Dichtelement 116 mit dem äußeren und der äußere über ein weiteres Dichtelement 116 mit dem Außenbehälter 110 verbunden ist.

Der Zwischenraum zwischen dem inneren und dem äußeren Innenbehälter 120 kann je nach Anforderungen der kultivierten Organismen mit einem Substrat 122 befüllt sein oder nur von der Nährstofflösung N durchströmt werden.

Die unteren Winkel 111 des Außenbehälters 110 können abgerundet sein, um die Strömungsbedingungen für die Nährstofflösung N zu verbessern oder eine Reinigung zu vereinfachen.

An einer Außenseite der abgerundeten Winkel 111 kann eine Rohrleitung 371 als Teil eines Zuleitungssystems für die Nährstofflösung N angebracht sein.

### Fig.5

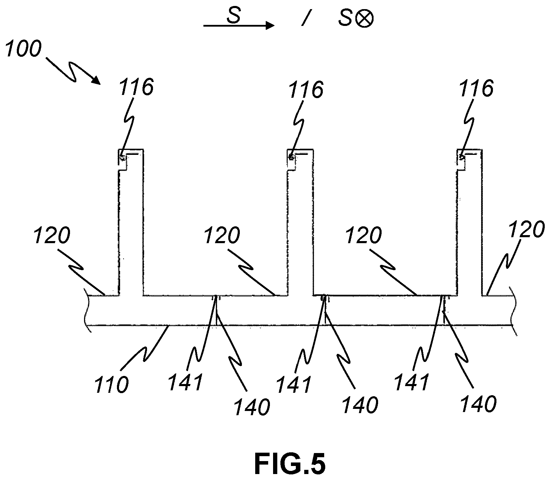

Figur 5 zeigt schematisch eine Anordnung mehrerer Innenbehälter 120 in einem Außenbehälter 110 eines Kultivierungsmoduls 100 eines erfindungsgemäßen Kultivierungssystems.

Mehrere Innenbehälter 120 können entlang der Strömungsrichtung S hintereinander und/oder quer zur Strömungsrichtung S nebeneinander in einem Außenbehälter 110 angeordnet sein, beispielsweise um in den Innenbehältern 120 unterschiedliche Organismen zu kultivieren.

Die Innenbehälter 120 können miteinander und/oder mit dem Außenbehälter 110 jeweils über Dichtmittel 116 verbunden sein.

Die Innenbehälter 120 können von mit Fixierungselementen 141 an den Innenbehältern 120 fixierten Stützvorrichtungen 140 unterstützt sein.

**Bezugszeichenliste**

| | | | |
|---|---|---|---|
| 100 | Kultivierungsmodul | 250 | Wartungsklappe |
| 110 | Außenbehälter | 251 | Lüftungsöffnung |
| 111 | Winkel | 260 | Anschluss |
| 115 | Nährstoffraum | 270 | Ableitungssystem |
| 116 | Dichtelement | 271 | Rohrleitung |
| 120 | Innenbehälter | 300 | Einspeisemodul |
| 121 | Durchtrittsöffnung | 330 | Anschlussvorrichtung |
| 122 | Substrat | 340 | Einspeise-Steuervorrichtung |
| 130 | Verbindungsvorrichtung | 350 | Wartungsklappe |
| 140 | Stützvorrichtung | 351 | Lüftungsöffnung |
| 141 | Fixierungselement | 360 | Anschluss |
| 200 | Entnahmemodul | 370 | Zuleitungssystem |
| 230 | Entnahme-Anschlussvorrichtung | 371 | Rohrleitung |
| 240 | Entnahme-Steuervorrichtung | 400 | Endkappe |
| 241 | Eingangsöffnung | 420 | Überwachungselement |
| 242 | Rohr | E | Symmetrieebene |
| 243 | Schutzgitter | N | Nährstofflösung |
| 244 | Grundplatte | S | Strömungsrichtung |
| 245 | Kragen | | |

## Patentansprüche

1. Modulares Kultivierungssystem zur Kultivierung von prokaryotischen und/oder eukaryotischen Organismen mit einer Nährstofflösung (N) für die Organismen, wobei das Kultivierungssystem
a. eine Anzahl von für die Nährstofflösung (N) leitend miteinander verbundenen Kultivierungsmodulen (100) zur Aufnahme der Organismen umfasst, und
b. ein mit einem der Kultivierungsmodule (100) für die Nährstofflösung (N) leitend verbundenes Entnahmemodul (200) zur kontrollierten Entnahme der Nährstofflösung (N) aus dem Kultivierungsmodul (100) umfasst,
c. wobei die Kultivierungsmodule (100) jeweils
i. einen Außenbehälter (110) zur Durchströmung mit der Nährstofflösung (N) in einer Strömungsrichtung (S) umfassen,
ii. einen zumindest teilweise in dem Außenbehälter (110) angeordneten Innenbehälter (120) zur Aufnahme der Organismen umfassen, und
iii. eine Anzahl von Verbindungsvorrichtungen (130) zur für die Nährstofflösung (N) leitenden Verbindung des Außenbehälters (110) mit dem Außenbehälter (110) eines weiteren Kultivierungsmoduls (100) und/oder mit dem Entnahmemodul (200) umfassen,
iv. wobei der Innenbehälter (120) zumindest abschnittsweise für die Nährstofflösung (N) durchlässig ist, und
v. wobei zwischen dem Außenbehälter (110) und dem Innenbehälter (120) zumindest quer zur Strömungsrichtung (S) horizontal neben dem Innenbehälter (120) ein Nährstoffraum (115) zur Durchströmung mit der Nährstofflösung (N) angeordnet ist, und
d. wobei das Entnahmemodul (200) eine Entnahme-Steuervorrichtung (240) zur Steuerung eines Flusses der durch das Entnahmemodul (200) aus dem mit dem Entnahmemodul (200) verbundenen Kultivierungsmodul (100) entnommenen Nährstofflösung (N) umfasst,
**dadurch gekennzeichnet, dass**
e. die Entnahme-Steuervorrichtung (240) einen Bell-Siphon mit einer höhenverstellbaren Eingangsöffnung (241) für die Nährstofflösung (N) umfasst.

2. Kultivierungssystem nach Anspruch 1,
**dadurch gekennzeichnet, dass**
das Entnahmemodul (200) eine Entnahme-Anschlussvorrichtung (230) zum für die Nährstofflösung (N) leitenden Anschluss des Entnahmemoduls (230) an eine der Verbindungsvorrichtungen (130) eines der Kultivierungsmodule (100) umfasst.

3. Kultivierungssystem nach Anspruch 1 oder 2,
**gekennzeichnet durch**
a. zumindest ein mit einem der Kultivierungsmodule (100) für die Nährstofflösung (N) leitend verbundenes Einspeisemodul (300) zur kontrollierten Einspeisung der Nährstofflösung (N) in das Kultivierungsmodul (100),
b. wobei das Einspeisemodul (300) eine Einspeise-Steuervorrichtung (340) zur Steuerung eines Flusses, einer Temperatur und/oder einer chemischen Zusammensetzung der durch das Einspeisemodul (300) in das mit dem Einspeisemodul (300) verbundene Kultivierungsmodul (100) eingespeisten Nährstofflösung (N) umfasst.

4. Kultivierungssystem nach einem der Ansprüche 1 bis 3,
**dadurch gekennzeichnet, dass**
zumindest eine der Verbindungsvorrichtungen (130) eine Durchtritts-Steuervorrichtung (131) zur Steuerung eines Flusses der Nährstofflösung (N) durch die Verbindungsvorrichtung (130) umfasst.

5. Kultivierungssystem nach einem der Ansprüche 1 bis 4,
**dadurch gekennzeichnet, dass**
der Nährstoffraum (115) zumindest eines der Kultivierungsmodule (100) vertikal unter dem Innenbehälter (120) und/oder beidseits quer zur Strömungsrichtung (S) horizontal neben dem Innenbehälter (120) angeordnet ist.

6. Kultivierungssystem nach einem der Ansprüche 1 bis 5,
**dadurch gekennzeichnet, dass**
der Außenbehälter (110) und der Innenbehälter (120) zumindest eines der Kultivierungsmodule (100) rinnenförmig ausgestaltet sind.

7. Kultivierungssystem nach Anspruch 6,
**dadurch gekennzeichnet, dass**
der Außenbehälter (110) und der Innenbehälter (120) des zumindest einen Kultivierungsmoduls (100)
a. jeweils einen u-förmigen oder halbkreisförmigen Querschnitt quer zur Strömungsrichtung (S) aufweisen,
b. koaxial zueinander angeordnet sind und/oder
c. jeweils als gerade Rinne ausgebildet sind.

8. Kultivierungssystem nach einem der Ansprüche 1 bis 7,
**dadurch gekennzeichnet, dass** der Außenbehälter (110) und/oder der Innenbehälter (120) zumindest eines der Kultivierungsmodule (100) an einer dem Nährstoffraum (114) zugewandten Seite eine Oberflächenstrukturierung und/oder eine Oberflächenbeschichtung zur Reduzierung eines Flusswiderstands der Nährstofflösung (N) und/oder zur Reduzierung einer Anhaftung von Mikroorganismen aufweist.

9. Kultivierungssystem nach einem der Ansprüche 1 bis 8,
**dadurch gekennzeichnet, dass** der Innenbehälter (120) zumindest eines der Kultivierungsmodule (100) eine Mehrzahl von vertikal in unterschiedlicher Höhe angeordneten Durchtrittsöffnungen (121) für die Nährstofflösung aufweist.

10. Kultivierungssystem nach einem der Ansprüche 1 bis 9,
**dadurch gekennzeichnet, dass** der Innenbehälter (120) zumindest eines der Kultivierungsmodule (100) ein luftdurchlässiges und wasserdurchlässiges Substrat (122) für die Organismen enthält.

11. Kultivierungssystem nach einem der Ansprüche 1 bis 10,
**dadurch gekennzeichnet, dass** der Innenbehälter (120) und der Außenbehälter (110) zumindest eines der Kultivierungsmodule (100) den Nährstoffraum (115) lichtdicht, flüssigkeitsdicht und/oder gasdicht umschließen.

12. Kultivierungssystem nach einem der Ansprüche 1 bis 11,
**gekennzeichnet durch**
eine Anzahl von Überwachungselementen (420) zur Überwachung der Nährstofflösung (N).

13. Kultivierungssystem nach einem der Ansprüche 1 bis 12,
**dadurch gekennzeichnet, dass**
der Bell-Siphon eine höhenverstellbare Ausgangsöffnung für die Nährstofflösung (N) umfasst.

14. Verfahren zur Kultivierung von prokaryotischen und/oder eukaryotischen Organismen mit einer Nährstofflösung (N), in einem Kultivierungssystem nach einem der Ansprüche 1 bis 13.

15. Verfahren nach Anspruch 14,
**gekennzeichnet durch folgenden Schritt:**
sequentielles Fluten jeweils einer Teilmenge der Kultivierungsmodule (100) des Kultivierungssystems mit der Nährstofflösung (N).

## Claims

1. A modular culture system for culturing prokaryotic and/or eukaryotic organisms using a nutrient solution (N) for the organisms, the culture system comprising
a. a number of culture modules (100) for accommodating the organisms, the culture modules (100) being connected to one another in a manner conducting the nutrient solution (N), and
b. an extraction module (200) connected in a manner conducting the nutrient solution (N) to one of the culture modules (100) for the controlled extraction of the nutrient solution (N) from the culture module (100),
c. each of the culture modules (100) comprising
i. an outer container (110) for conducting the nutrient solution (N) in a flow direction (S),
ii. an inner container (120) arranged at least partially within the outer container (110) for accommodating the organisms, and
iii. a number of connecting devices (130) for connecting the outer container (110) to the outer container (110) of a further culture module (100) and/or to the extraction module (200) in a manner conducting the nutrient solution (N),
iv. wherein the inner container (120) is permeable to the nutrient solution (N) at least in sections, and
v. wherein a nutrient chamber (115) for conducting the nutrient solution (N) is arranged between the outer container (110) and the inner container (120) and adjacent to the inner container (120) at least in a horizontal direction transverse to the flow direction (S), and
d. wherein the extraction module (200) comprises an extraction control device (240) for controlling a flow of the nutrient solution (N) extracted by the extraction module (200) from the culture module (100) connected to the extraction module (200),
**characterised in that**
e. the extraction control device (240) comprises a Bell siphon with a height-adjustable inlet opening (241) for the nutrient solution (N).

2. The culture system according to claim 1,
**characterised in that**
the extraction module (200) comprises an extraction connection device (230) for connecting the extraction module (230) to one of the connection devices (130) of one of the culture modules (100) in a manner conducting the nutrient solution (N).

3. The culture system according to claim 1 or 2,
**characterised by**
a. at least one feed module (300) connected in a manner conducting the nutrient solution (N) to one of the culture modules (100) for the controlled feeding of the nutrient solution (N) into the culture module (100),
b. wherein the feed module (300) comprises a feed control device (340) for controlling a flow, a temperature and/or a chemical composition of the nutrient solution (N) fed by the feed module (300) into the culture module (100) connected to the feed module (300).

4. The culture system according to any one of claims 1 to 3,
**characterised in that**
at least one of the connecting devices (130) comprises a flow control device (131) for controlling a flow of the nutrient solution (N) through the connecting device (130).

5. The culture system according to any one of claims 1 to 4,
**characterised in that**
the nutrient chamber (115) of at least one of the culture modules (100) is arranged vertically below the inner container (120) and/or adjacent to the inner container (120) on both sides in a horizontal direction transverse to the flow direction (S).

6. The culture system according to any one of claims 1 to 5,
**characterised in that**
the outer container (110) and the inner container (120) of at least one of the culture modules (100) are trough-shaped.

7. The culture system according to claim 6,
**characterised in that**
the outer container (110) and the inner container (120) of the at least one culture module (100)
a. each have a u-shaped or semicircular cross-section transverse to the flow direction (S),
b. are arranged coaxially with one another and/or
c. are each designed as a straight trough.

8. The culture system according to any one of claims 1 to 7,
**characterised in that**
the outer container (110) and/or the inner container (120) of at least one of the culture modules (100) has a surface texture and/or a surface coating for reducing the flow resistance of the nutrient solution (N) and/or for reducing the adhesion of microorganisms on a side facing the nutrient chamber (115).

9. The culture system according to any one of claims 1 to 8,
**characterised in that**
the inner container (120) of at least one of the culture modules (100) comprises a plurality of through-holes (121) for the nutrient solution, arranged vertically at different heights.

10. The culture system according to any one of claims 1 to 9,
**characterised in that**
the inner container (120) of at least one of the culture modules (100) contains an air-permeable and water-permeable substrate (122) for the organisms.

11. The culture system according to any one of claims 1 to 10,
**characterised in that**
the inner container (120) and the outer container (110) of at least one of the culture modules (100) enclose the nutrient chamber (115) in a light-tight, liquid-tight and/or gas-tight manner.

12. The culture system according to any one of claims 1 to 11,
**characterised by**
a number of monitoring elements (420) for monitoring the nutrient solution (N).

13. The culture system according to any one of claims 1 to 12,
**characterised in that**
the Bell siphon comprises a height-adjustable outlet opening for the nutrient solution (N).

14. A method for the culturing prokaryotic and/or eukaryotic organisms using a nutrient solution (N) in a culture system according to any one of claims 1 to 13.

15. The method according to claim 14,
**characterised by the following step:**
sequentially flooding a subset of the culture modules (100) of the culture system with the nutrient solution (N).

## Revendications

1. Système de culture modulaire destiné à la culture d'organismes procaryotes et/ou eucaryotes à l'aide d'une solution nutritive (N) pour lesdits organismes, ledit système de culture
a. comprenant un certain nombre de modules de culture (100) pour recevoir les organismes, les modules de culture (100) étant reliés entre eux de manière à permettre le passage de la solution nutritive (N), et
b. un module de prélèvement (200) relié de manière conductrice pour la solution nutritive (N) à l'un des modules de culture (100) afin de prélever de manière contrôlée la solution nutritive (N) du module de culture (100),
c. les modules de culture (100) comprenant chacun
i. un récipient extérieur (110) destiné à être traversé par la solution nutritive (N) dans une direction d'écoulement (S),
ii. un récipient intérieur (120) disposé au moins partiellement dans le récipient extérieur (110) pour recevoir les organismes, et
iii. un certain nombre de dispositifs de raccordement (130) destinés à relier, pour la circulation de la solution nutritive (N), le récipient extérieur (110) au récipient extérieur (110) d'un autre module de culture (100) et/ou au module de prélèvement (200),
iv. le récipient intérieur (120) étant perméable à la solution nutritive (N) au moins par sections, et
v. un espace nutritif (115) destiné à être traversé par la solution nutritive (N) étant disposé entre le réservoir extérieur (110) et le réservoir intérieur (120) et à côté du réservoir intérieur (120) au moins dans une direction horizontale et transversale à la direction d'écoulement (S), et
d. le module de prélèvement (200) comprenant un dispositif de régulation de prélèvement (240) destiné à réguler un écoulement de la solution nutritive (N) prélevée par le module de prélèvement (200) du module de culture (100) relié au module de prélèvement (200),
**caractérisé en ce que**
e. le dispositif de régulation de prélèvement (240) comprend un siphon de Bell avec une ouverture d'entrée (241) réglable en hauteur pour la solution nutritive (N).

2. Système de culture selon la revendication 1,
**caractérisé en ce que**
le module de prélèvement (200) comprend un dispositif de raccordement de prélèvement (230) destiné à raccorder le module de prélèvement (230) à l'un des dispositifs de raccordement (130) de l'un des modules de culture (100) de manière à permettre le passage de la solution nutritive (N).

3. Système de culture selon la revendication 1 ou 2,
**caractérisé par**
a. au moins un module d'alimentation (300) relié de manière conductrice pour la solution nutritive (N) à l'un des modules de culture (100) afin d'alimenter de manière contrôlée la solution nutritive (N) dans le module de culture (100),
b. le module d'alimentation (300) comprenant un dispositif de régulation d'alimentation (340) destiné à réguler un débit, une température et/ou une composition chimique de la solution nutritive (N) alimentée par le module d'alimentation (300) dans le module de culture (100) relié au module d'alimentation (300).

4. Système de culture selon l'une des revendications 1 à 3,
**caractérisé en ce que**
au moins l'un des dispositifs de raccordement (130) comprend un dispositif de régulation de débit (131) destiné à réguler le débit de la solution nutritive (N) à travers le dispositif de raccordement (130).

5. Système de culture selon l'une des revendications 1 à 4,
**caractérisé en ce que**
l'espace nutritif (115) d'au moins l'un des modules de culture (100) est disposé verticalement sous le récipient intérieur (120) et/ou dans une direction horizontale et transversale à la direction d'écoulement (S) de part et d'autre du récipient intérieur (120).

6. Système de culture selon l'une des revendications 1 à 5,
**caractérisé en ce que**
le récipient extérieur (110) et le récipient intérieur (120) d'au moins l'un des modules de culture (100) sont conçus en forme de gouttière.

7. Système de culture selon la revendication 6,
**caractérisé en ce que**
le récipient extérieur (110) et le récipient intérieur (120) dudit au moins un module de culture (100)
a. présentent chacun une section transversale perpendiculaire à la direction d'écoulement (S) en forme de u ou semi-circulaire,
b. sont disposés de manière coaxiale l'un par rapport à l'autre et/ou
c. sont chacun conçus comme une gouttière droite.

8. Système de culture selon l'une des revendications 1 à 7,
**caractérisé en ce que**
le récipient extérieur (110) et/ou le récipient intérieur (120) d'au moins l'un des modules de culture (100) présente sur un côté tourné vers l'espace nutritif (115) une structure de surface et/ou un revêtement de surface destiné à réduire la résistance à l'écoulement de la solution nutritive (N) et/ou à réduire l'adhérence de micro-organismes.

9. Système de culture selon l'une des revendications 1 à 8,
**caractérisé en ce que**
le récipient intérieur (120) d'au moins l'un des modules de culture (100) comporte une pluralité d'orifices de passage (121) pour la solution nutritive disposés verticalement à différentes hauteurs.

10. Système de culture selon l'une des revendications 1 à 9,
**caractérisé en ce que**
le récipient intérieur (120) d'au moins l'un des modules de culture (100) contient un substrat (122) perméable à l'air et à l'eau pour les organismes.

11. Système de culture selon l'une des revendications 1 à 10,
**caractérisé en ce que**
le récipient intérieur (120) et le récipient extérieur (110) d'au moins l'un des modules de culture (100) entourent l'espace nutritif (115) de manière étanche à la lumière, aux liquides et/ou aux gaz.

12. Système de culture selon l'une des revendications 1 à 11,
**caractérisé par**
un certain nombre d'éléments de surveillance (420) destinés à surveiller la solution nutritive (N).

13. Système de culture selon l'une des revendications 1 à 12,
**caractérisé en ce que**
le siphon de Bell comprend une ouverture de sortie réglable en hauteur pour la solution nutritive (N).

14. Procédé de culture d'organismes procaryotes et/ou eucaryotes en utilisant une solution nutritive (N) dans un système de culture selon l'une des revendications 1 à 13.

15. Procédé selon la revendication 14,
**caractérisé par l'étape suivante :**
remplir de façon séquentielle un sous-ensemble des modules de culture (100) du système de culture avec la solution nutritive (N).
